# EUROPEAN PATENT APPLICATION

(11) **EP 4 539 421 A1**
(43) Date of publication of application: **16.04.2025**
(21) Application number: 23823013.0
(22) Date of filing: 08.06.2023
(51) Int. Cl.: H04L 43/0852

(54) **DATA PACKET SET TIME DELAY PROCESSING METHODS, APPARATUS, AND COMMUNICATION DEVICE**

(30) Priority: 13.06.2022 CN 202210666339
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Michalski Hüttermann & Partner Patentanwälte mbB
(86) International application number: PCT/CN2023/099099
(87) International publication number: WO 2023/241445

(57) **Abstract**

This application discloses a data packet set delay processing method and apparatus, and a communication device, pertaining to the field of wireless communication technologies. The data packet set delay processing method in embodiments of this application includes: performing, by a radio access network device, a first target operation, where the first target operation includes at least one of the following operations: a first operation corresponding to a data packet set downlink delay; a second operation corresponding to the data packet set downlink delay; a first operation corresponding to a data packet set uplink delay; a second operation corresponding to the data packet set uplink delay; a first operation corresponding to a data packet set delay; and a second operation corresponding to the data packet set delay.

## Description

### CROSS-REFERENCE TO RELATED APPLICATIONS

This application claims priority to Chinese Patent Application No. 202210666339.X, filed in China on June 13, 2022, which is incorporated herein by reference in its entirety.

### TECHNICAL FIELD

This application pertains to the field of wireless communications technologies, and specifically relates to a data packet set delay processing method and apparatus, and a communication device.

### BACKGROUND

A data packet set delay is different from a data packet delay. The data packet delay is a delay of a single data packet, and the data packet set delay is a delay of a group of data packets, that is, a time for transmission from the 1st data packet to the last data packet in a data packet set cannot exceed a data packet set delay budget.

How to monitor the data packet set delay is a technical problem to be urgently resolved.

### SUMMARY

Embodiments of this application provide a data packet set delay processing method and apparatus, and a communication device, which can resolve the problem of how to monitor a data packet set delay.

According to a first aspect, a data packet set delay processing method is provided, including:
performing, by a radio access network device, a first target operation, where the first target operation includes at least one of the following operations:
a first operation corresponding to a data packet set downlink delay;
a second operation corresponding to the data packet set downlink delay;
a first operation corresponding to a data packet set uplink delay;
a second operation corresponding to the data packet set uplink delay;
a first operation corresponding to a data packet set delay; and
a second operation corresponding to the data packet set delay.

According to a second aspect, a data packet set delay processing method is provided, including:
performing, by an anchor gateway, a second target operation, where the second target operation includes at least one of the following:
a third operation corresponding to a data packet set downlink delay;
a fourth operation corresponding to the data packet set downlink delay;
a third operation corresponding to a data packet set uplink delay;
a fourth operation corresponding to the data packet set uplink delay;
a third operation corresponding to a data packet set delay; and
a fourth operation corresponding to the data packet set delay.

According to a third aspect, a data packet set delay processing method is provided, including:
performing, by a terminal, a third target operation, where the third target operation includes at least one of the following operations:
a fifth operation corresponding to a data packet set downlink delay;
a sixth operation corresponding to the data packet set downlink delay;
a fifth operation corresponding to a data packet set uplink delay;
a sixth operation corresponding to the data packet set uplink delay;
a fifth operation corresponding to a data packet set delay; and
a sixth operation corresponding to the data packet set delay.

According to a fourth aspect, a data packet set delay processing method is provided, including:
performing, by a terminal, a fourth target operation, where the fourth target operation includes at least one of the following operations:
recording T22;
recording T32;
sending T32 to a fifth target end;
sending T32 to an anchor gateway;
sending T22 to the fifth target end; and
sending T22 to the anchor gateway; where
T22 is one of the following: a time at which a radio access network device sends the last data packet of a first data packet set to the terminal, a time at which the terminal receives or successfully receives the last data packet of the first data packet set, and a time at which the last data packet of the first data packet set arrives at the terminal; and
T32 is one of the following: a time at which the terminal starts to wait for the radio access network device to schedule the 1st data packet of a second data packet set, a time at which the 1st data packet of the second data packet set arrives at the terminal, and a time at which the terminal sends the 1st data packet of the second data packet set to the radio access network device; where
the fifth target end includes one of the following: a radio access network device and a Uu interface.

According to a fifth aspect, a data packet set delay processing method is provided, including:
generating, by a core network device, a data packet set delay monitoring requirement; and
sending, by the core network device, the data packet set delay monitoring requirement.

According to a sixth aspect, a data packet set delay processing apparatus is provided, including:
an execution module, configured to perform a first target operation, where the first target operation includes at least one of the following operations:
a first operation corresponding to a data packet set downlink delay;
a second operation corresponding to the data packet set downlink delay;
a first operation corresponding to a data packet set uplink delay;
a second operation corresponding to the data packet set uplink delay;
a first operation corresponding to a data packet set delay; and
a second operation corresponding to the data packet set delay.

According to a seventh aspect, a data packet set delay processing apparatus is provided, including:
an execution module, configured to perform a second target operation, where the second target operation includes at least one of the following:
a third operation corresponding to a data packet set downlink delay;
a fourth operation corresponding to the data packet set downlink delay;
a third operation corresponding to a data packet set uplink delay;
a fourth operation corresponding to the data packet set uplink delay;
a third operation corresponding to a data packet set delay; and
a fourth operation corresponding to the data packet set delay.

According to an eighth aspect, a data packet set delay processing apparatus is provided, including:
an execution module, configured to perform a third target operation, where the third target operation includes at least one of the following operations:
a fifth operation corresponding to a data packet set downlink delay;
a sixth operation corresponding to the data packet set downlink delay;
a fifth operation corresponding to a data packet set uplink delay;
a sixth operation corresponding to the data packet set uplink delay;
a fifth operation corresponding to a data packet set delay; and
a sixth operation corresponding to the data packet set delay.

According to a ninth aspect, a data packet set delay processing apparatus is provided, including:
an execution module, configured to perform a fourth target operation, where the fourth target operation includes at least one of the following operations:
recording T22;
recording T32;
sending T32 to a fifth target end;
sending T32 to an anchor gateway;
sending T22 to the fifth target end; and
sending T22 to the anchor gateway; where
T22 is one of the following: a time at which a radio access network device sends the last data packet of a first data packet set to a terminal, a time at which the terminal receives or successfully receives the last data packet of the first data packet set, and a time at which the last data packet of the first data packet set arrives at the terminal; and
T32 is one of the following: a time at which the terminal starts to wait for the radio access network device to schedule the 1st data packet of a second data packet set, a time at which the 1st data packet of the second data packet set arrives at the terminal, and a time at which the terminal sends the 1st data packet of the second data packet set to the radio access network device; where
the fifth target end includes one of the following: a radio access network device and a Uu interface.

According to a tenth aspect, a data packet set delay processing apparatus is provided, including:
a generating module, configured to generate a data packet set delay monitoring requirement; and
a sending module, configured to send the data packet set delay monitoring requirement.

According to an eleventh aspect, a communication device is provided, where the terminal includes a processor and a memory, where the memory stores a program or instructions capable of running on the processor, and when the program or the instructions are executed by the processor, the steps of the data packet set delay processing method according to the first aspect, the second aspect, the third aspect, the fourth aspect, or the fifth aspect are implemented.

According to a twelfth aspect, a radio access network device is provided, including a processor and a communication interface, where the processor is configured to perform a first target operation, and the first target operation includes at least one of the following operations:
a first operation corresponding to a data packet set downlink delay;
a second operation corresponding to the data packet set downlink delay;
a first operation corresponding to a data packet set uplink delay;
a second operation corresponding to the data packet set uplink delay;
a first operation corresponding to a data packet set delay; and
a second operation corresponding to the data packet set delay.

According to a thirteenth aspect, an anchor gateway is provided, including a processor and a communication interface, where the processor is configured to perform a second target operation, and the second target operation includes at least one of the following:
a third operation corresponding to a data packet set downlink delay;
a fourth operation corresponding to the data packet set downlink delay;
a third operation corresponding to a data packet set uplink delay;
a fourth operation corresponding to the data packet set uplink delay;
a third operation corresponding to a data packet set delay; and
a fourth operation corresponding to the data packet set delay.

According to a fourteenth aspect, a terminal is provided, including a processor and a communication interface, where the processor is configured to perform a third target operation, and the third target operation includes at least one of the following operations:
a fifth operation corresponding to a data packet set downlink delay;
a sixth operation corresponding to the data packet set downlink delay;
a fifth operation corresponding to a data packet set uplink delay;
a sixth operation corresponding to the data packet set uplink delay;
a fifth operation corresponding to a data packet set delay; and
a sixth operation corresponding to the data packet set delay.

According to a fifteenth aspect, a terminal is provided, including a processor and a communication interface, where the processor is configured to perform a fourth target operation, and the fourth target operation includes at least one of the following operations:
recording T22;
recording T32;
sending T32 to a fifth target end;
sending T32 to an anchor gateway;
sending T22 to the fifth target end; and
sending T22 to the anchor gateway; where
T22 is one of the following: a time at which a radio access network device sends the last data packet of a first data packet set to the terminal, a time at which the terminal receives or successfully receives the last data packet of the first data packet set, and a time at which the last data packet of the first data packet set arrives at the terminal; and
T32 is one of the following: a time at which the terminal starts to wait for the radio access network device to schedule the 1st data packet of a second data packet set, a time at which the 1st data packet of the second data packet set arrives at the terminal, and a time at which the terminal sends the 1st data packet of the second data packet set to the radio access network device; where
the fifth target end includes one of the following: a radio access network device and a Uu interface.

According to a sixteenth aspect, a core network device is provided, including a processor and a communication interface, where the processor is configured to generate a data packet set delay monitoring requirement; and the communication interface is configured to send the data packet set delay monitoring requirement.

According to a seventeenth aspect, a communication system is provided, including a terminal, a radio access network device, an anchor gateway, and a core network device, where the radio access network device can be configured to perform the steps of the data packet set delay processing method according to the first aspect, the anchor gateway can be configured to perform the steps of the data packet set delay processing method according to the second aspect, the terminal can be configured to perform the steps of the data packet set delay processing method according to the third aspect or the fourth aspect, and the core network device can be configured to perform the steps of the data packet set delay processing method according to the fifth aspect.

According to an eighteenth aspect, a readable storage medium is provided, where a program or instructions are stored in the readable storage medium, and when the program or the instructions are executed by a processor, the steps of the data packet set delay processing method according to the first aspect, the second aspect, the third aspect, the fourth aspect, or the fifth aspect are implemented.

According to a nineteenth aspect, a chip is provided, where the chip includes a processor and a communication interface, the communication interface is coupled to the processor, and the processor is configured to run a program or instructions to implement the steps of the data packet set delay processing method according to the first aspect, the second aspect, the third aspect, the fourth aspect, or the fifth aspect.

According to a twentieth aspect, a computer program/program product is provided, where the computer program/program product is stored in a storage medium, and the computer program/program product is executed by at least one processor to implement the steps of the data packet set delay processing method according to the first aspect, the second aspect, the third aspect, the fourth aspect, or the fifth aspect.

In the embodiments of this application, a related operation for monitoring a data packet set downlink delay, uplink delay, and/or round-trip delay is defined, so as to ensure normal transmission of a data packet set.

### BRIEF DESCRIPTION OF DRAWINGS

FIG. 1 is a block diagram of a wireless communication system to which the embodiments of this application are applicable;
FIG. 2 is a first schematic flowchart of a data packet set delay processing method according to an embodiment of this application;
FIG. 3 is a second schematic flowchart of a data packet set delay processing method according to an embodiment of this application;
FIG. 4 is a third schematic flowchart of a data packet set delay processing method according to an embodiment of this application;
FIG. 5 is a fourth schematic flowchart of a data packet set delay processing method according to an embodiment of this application;
FIG. 6 is a fifth schematic flowchart of a data packet set delay processing method according to an embodiment of this application;
FIG. 7 is a schematic flowchart for completing calculation of a data packet set downlink delay by a radio access network device according to an embodiment of this application;
FIG. 8 is a schematic diagram of time information related to data packet set downlink delays according to an embodiment of this application;
FIG. 9 is a schematic flowchart for completing calculation of a data packet set uplink delay by an anchor gateway according to an embodiment of this application;
FIG. 10 is a schematic diagram of time information related to data packet set uplink delays according to an embodiment of this application;
FIG. 11 is a schematic flowchart for completing calculation of a data packet set downlink delay by an anchor gateway according to an embodiment of this application;
FIG. 12 is a schematic flowchart for completing calculation of a data packet set uplink delay by a radio access network device according to an embodiment of this application;
FIG. 13 is a schematic diagram of forged data packets generated in a process of calculating a delay of a first data packet set according to an embodiment of this application;
FIG. 14 is a schematic diagram of forged data packets generated in a process of calculating a delay of a second data packet set according to an embodiment of this application;
FIG. 15 is a first schematic structural diagram of a data packet set delay processing apparatus according to an embodiment of this application;
FIG. 16 is a second schematic structural diagram of a data packet set delay processing apparatus according to an embodiment of this application;
FIG. 17 is a third schematic structural diagram of a data packet set delay processing apparatus according to an embodiment of this application;
FIG. 18 is a fourth schematic structural diagram of a data packet set delay processing apparatus according to an embodiment of this application;
FIG. 19 is a fifth schematic structural diagram of a data packet set delay processing apparatus according to an embodiment of this application;
FIG. 20 is a schematic structural diagram of a communication device according to an embodiment of this application;
FIG. 21 is a schematic diagram of a hardware structure of a terminal according to an embodiment of this application;
FIG. 22 is a first schematic diagram of a hardware structure of a network-side device according to an embodiment of this application; and
FIG. 23 is a second schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems.

The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

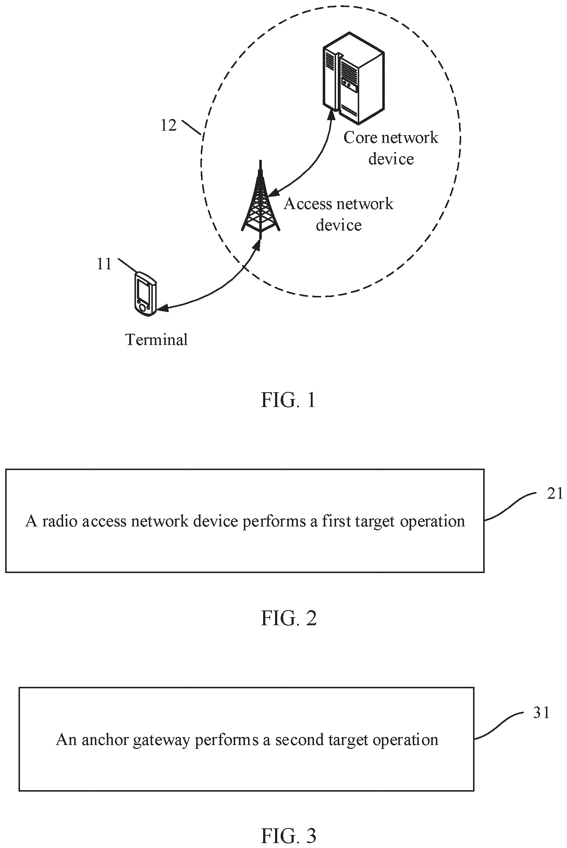

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

Scenario: Data of video streams in extended reality (Extended Reality, XR) may be divided into intra-picture (intra picture, I) frames, predictive (predictive, P) frames, and bi-directional interpolated prediction (bi-directional interpolated prediction, B) frames. I frames are also referred to as independently decoded frames. A frame between I frames are a P frame or a B frame. An I frame associated with a P frame or B frame is an I frame closest to the P frame or B frame in the timeline. Decoding cannot be implemented in absence of an I frame; however, decryption of I frames can be implemented in absence of non-I frames. One frame may be understood as a data packet set formed by one or more data packets. One frame may be formed by multiple video slices (video slice). A video slice can also be divided into I slice (slice), P slice, B slice, and so on. One slice may also be understood as a data packet set formed by one or more data packets. Therefore, scheduling in a unit of data packet set is a new scenario.

A data packet set delay is different from a data packet delay. The data packet delay is a delay of a single data packet, and the data packet set delay is a delay of a group of data packets, that is, a time for transmission from the 1st data packet to the last data packet in a data packet set cannot exceed a data packet set delay budget.

To monitor a delay based on a unit of data packet set, the following problems need to be resolved:
Problem 1: Data packet set is a one-way concept, and one data packet set cannot have both uplink and downlink data packets. Therefore, a round trip time (Round Trip Time, RTT) being used as a data packet set delay may be not applicable. 1/2 of the round-trip time being used as a one-way delay of the data packet set delay may be neither applicable. Because the number of data packets contained in each data packet set is different, different data packet sets have different delays even if the data packet sets are of a same type. Therefore, statistics collection need to be performed based on a granularity of data packet set (such as per (per) packet data unit (Packet Data Unit, PDU) set (set)), which is quite different from exiting sampling statistics of a delay based on a granularity of data packet (for example, per PDU).

Problem 2: The existing data packet delay is a one-way data packet delay calculated by a user plane function (User Plane Function, UPF) based on 1/2 of the round trip time. However, due to unidirectionality of the data packet set, it is impossible to directly support calculation of a data packet set delay on the UPF. For example, for a downlink data packet set, the UPF may mark a transmission time T1 in the 1st data packet; however, the UPF cannot obtain a time T2 at which the last data packet of the downlink data packet set arrives at a radio access network (Radio Access Network, RAN). Because no uplink data packet capable of carrying T2 is present in the data packet set, it is impossible to calculate a data packet set downlink delay on the UPF. This also holds true for an uplink data packet set, and a data packet set uplink delay cannot be calculated on the RAN side.

Problem 3: A data packet set contains multiple data packets, and a data packet set delay is a time difference between a transmission time of the last data packet and an arrival time of the 1st data packet. The two need to be associated.

Optionally, obtaining may be understood as acquiring from configuration, receiving, obtaining through receiving upon a request, obtaining through self-learning, obtaining through deduction based on non-received information, or obtaining through processing received information, which may be determined according to actual needs. This is not limited in some embodiments of this application. For example, when specific capability indication information sent by a device is not received, it can be deduced that the device does not support such capability.

Optionally, transmitting may include broadcasting, broadcasting through a system message, or returning a response after receiving the request.

In an optional embodiment of this application, the communication device may include at least one of the following: a communication network element and a terminal.

In an embodiment of this application, the communication network element may include at least one of the following: a core network network element and a radio access network network element.

In the embodiments of this application, the core network (Core Network, CN) network element may include but is not limited to at least one of the following: a core network device, a core network node, a core network function, a core-network network unit, a mobility management entity (Mobility Management Entity, MME), an access mobility management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function unit (Policy and Charging Rules Function, PCRF), a serving GPRS support node (Serving GPRS Support Node, SGSN), a gateway GPRS support node (Gateway GPRS Support Node, GGSN), or an application function (Application Function).

In the embodiments of this disclosure, the RAN network element may include but is not limited to at least one of the following: a radio access network device, a radio access network node, a radio access network function, a radio access network network element, a third generation partnership project (Third Generation Partnership Project, 3GPP) radio access network, a non-3GPP radio access network, a centralized unit (Centralized Unit, CU), a distributed unit (Distributed Unit, DU), a base station, an evolved NodeB (evolved Node B, eNB), a 5G NodeB (gNB), a radio network controller (Radio Network Controller, RNC), a NodeB (NodeB), a non-3GPP interworking function (Non-3GPP InterWorking Function, N3IWF), an access controller (Access Controller, AC) node, an access point (Access Point, AP) device, a wireless local area network (Wireless Local Area Network, WLAN) node, or an N3IWF.

The base station may be a base transceiver station (Base Transceiver Station, BTS) in a global system for mobile communications (Global System for Mobile Communications, GSM) or CDMA, may be a base station (NodeB) in Wide band code division multiple access (Wide band Code Division Multiple Access, WCDMA), or may be an evolved NodeB (Evolutional Node B, eNB or e-NodeB) in LTE, or a 5G NodeB (gNB). This is not limited in the embodiments of this application.

In an optional embodiment of this application, the UE may include at least one of the following: a terminal device, a terminal device and a card, and a card.

In an optional embodiment of this application, the card may include one of the following: a subscriber identity module (Subscriber Identity Module, SIM) card, a universal subscriber identity module (Universal Subscriber Identity Module, USIM) card, and an embedded subscriber identity module (Embedded-SIM, eSIM).

In an optional embodiment of this application, the terminal may include a relay supporting terminal functions and/or a terminal supporting relay functions. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that a specific type of the terminal is not limited in the embodiments of this application.

In an optional embodiment of this application, a data packet set may also be referred to as one of the following: a data packet set instance.

In an optional embodiment of this application, a data packet set uplink delay is a delay at the granularity or unit of data packet set in the uplink direction.

In an optional embodiment of this application, a data packet set downlink delay is a delay at the granularity or unit of data packet set in the downlink direction.

In an optional embodiment of this application, a data packet set round-trip delay may also be referred to as a data packet set loop delay, which may be represented by a sum of the data packet set uplink delay and the data packet set downlink delay.

In an optional embodiment of this application, monitoring (monitoring) includes monitoring and/or measurement.

In an optional embodiment of this application, a data packet set downlink delay between a radio access network device and an anchor gateway, a data packet set uplink delay between the radio access network device and the anchor gateway, and/or a data packet set round-trip delay between the radio access network device and the anchor gateway further includes at least one of the following: a residence time of a data packet set on the anchor gateway and a residence time of the data packet set on the radio access network device.

In an optional embodiment of this application, a data packet set downlink delay between a terminal and an anchor gateway, a data packet set uplink delay between the terminal and the anchor gateway, and/or a data packet set round-trip delay between the terminal and the anchor gateway further includes at least one of the following: a residence time of a data packet set on the anchor gateway and a residence time of the data packet set on the terminal.

In an optional embodiment of this application, a data packet set downlink delay between a terminal and a radio access network device, a data packet set downlink delay between the terminal and the radio access network device, and/or a data packet set round-trip delay between the terminal and the radio access network device further includes at least one of the following: a residence time of a data packet set on the radio access network device and a residence time of the data packet set on the terminal.

In an optional embodiment of this application, a data packet set may be referred to as a data set. A data packet set includes one or more data packets. Optionally, the data packet set has a boundary.

In an optional embodiment of this application, the data packet set is a concept in a cellular mobile communication network. The data packet set may be a segment formed by one or more data packets or a set formed by one or more data packets in a tunnel (such as a quality of service (Quality of Service, QoS) flow, a QoS sub-flow, and a radio bearer).

In an optional embodiment of this application, a data packet may be a PDU packet data unit.

In an optional embodiment of this application, the data packet set may be one of the following: a packet data unit set PDU set, one instance of a PDU set, a PDU set type, one instance of a PDU set type, a data segment or a data packet set in a tunnel (such as a QoS flow, a QoS sub-flow, and a radio bearer).

(1) In an implementation, one type of PDU set may include multiple PDU set instances. One type of PDU set may be identified by PDU set identifier (such as a QoS identifier at the PDU set level). Multiple different PDU set instances of one PDU set may be distinguished by a data packet set serial number (such as a PDU set serial number).

(2) In another implementation, one PDU set type may include multiple PDU sets. The PDU set is an instance of the PDU set type. The PDU set type may be identified by PDU set identifier (such as a QoS identifier at the PDU set level). Multiple different PDU sets of one PDU set type may be distinguished by a data packet set serial number (such as a PDU set serial number).

In an optional embodiment of this application, the data packet set type may be one of the following: a packet data unit set (PDU Set) and a tunnel (such as a QoS flow, a QoS sub-flow, and a radio bearer). One data packet set type may correspond to multiple data packet sets. The data packet set is an instance of the data packet set type. The data packet set type may be identified by a data packet set type identifier. The data packet set type identifier is, for example, a QoS identifier of a data packet set level. In this case, multiple data packet sets may be distinguished by serial numbers of the data packet sets.

In an implementation, the one or more data packet sets are of a same type or different types. Different types of data packet sets may be distinguished by identifiers of the data packet sets. Different data packet sets of one type may be distinguished by serial numbers of the data packet sets.

In an optional embodiment of this application, for a PDU set, the PDU set is formed by one or more PDUs, and the PDUs carry payload (such as a frame or a video slice (video slice)) of one information unit generated at the application level. In some implementations, the application layer requires all PDUs in the PDU set to use corresponding information units. In other implementations, when some PDUs are lost, the application layer can still recover all or part of the information unit.

In an optional embodiment of this application, a first delay budget (such as PSDB) is used to indicate a delay budget of one data packet set transmitted between a terminal and an anchor gateway (that is, a gateway that terminates an N6 interface) (that is, a time for transmission from the 1st data packet of the data packet set to the last data packet cannot exceed the first delay budget). Optionally, the first delay budget further includes at least one of the following: a residence time of the data packet set in the terminal and a residence time of the data packet set in the anchor gateway. The first delay budget can also be described as a data packet set delay budget.

In an optional embodiment of this application, the first delay budget or the data packet delay budget includes a packet set delay budget (such as PDU set delay budget (PDU Set delay budget, PSDB)). In an optional embodiment of this application, the PSDB refers to a delay budget of a group of data packets or one data packet set.

In an implementation, the PSDB is used to indicate an upper limit of a time that one PDU set may be delayed between the UE and the anchor gateway (that is, the gateway that terminates the N6 interface) (that is, a time for transmission from the 1st data packet of the PDU set to the last data packet cannot exceed the PSDB). For a specific QoS identifier (such as 5G quality of service identifier (5G QoS Identifier, 5QI)), a value of the PSDB may be different or the same in uplink and downlink.

In an optional embodiment of this application, the PSDB refers to a delay budget of a group of data packets or one data packet set.

In an optional embodiment of this application, a first delay budget or a first access network delay budget (such as an access network (Access Network, AN) PSDB) may refer to one of the following: a delay budget for transmission of one data packet set between the terminal and the RAN network element, and a value obtained by subtracting second core network delay information from a delay budget for transmission of one data packet set between the terminal and the anchor gateway. Optionally, the first delay budget or the first access network delay budget further includes at least one of the following: a residence time of the data packet set in the terminal and a residence time of the data packet set in the RAN network element.

In an optional embodiment of this application, a second delay budget (such as a packet delay budget (Packet Delay Budget, PDB)) is used to indicate a delay budget for transmission of one data packet between the terminal and the anchor gateway (that is, the gateway that terminates the N6 interface). Optionally, the second delay budget further includes at least one of the following: a residence time of the data packet in the terminal and a residence time of the data packet in the anchor gateway. The second delay budget can also be described as a data packet delay budget.

The data packet delay budget includes a packet delay budget (PDB). In an optional embodiment of this application, the PDB refers to a delay budget of a single data packet.

In an implementation, the PDB is used to indicate an upper limit of a time that one PDU may be delayed between the UE and the anchor gateway (that is, the gateway that terminates the N6 interface). The PDB may be applied to downlink packets received by the anchor gateway (such as a UPF) through the N6 interface and uplink packets sent by the terminal. For a specific QoS identifier (such as a 5QI), a value of the PDB may be the same in uplink and downlink.

In an optional embodiment of this application, a second delay budget or a second access network delay budget (such as an AN PDB) may refer to one of the following: a delay budget for transmission of one data packet between the terminal and the RAN network element, a value obtained by subtracting second core network delay information from a delay budget for transmission of one data packet between the terminal and the anchor gateway. Optionally, the second delay budget or the second access network delay budget further includes at least one of the following: a residence time of the data packet in the terminal and a residence time of the data packet in the RAN network element.

In an optional embodiment of this application, a second core network delay budget (such as a CN PDB) is used to indicate a delay budget for transmission of a data packet between the radio access network RAN and the anchor gateway. The second core network delay budget can also be described as a data packet core network delay budget. Optionally, the second core network delay information further includes at least one of the following: a residence time of the data packet in the anchor gateway and a residence time of the data packet in the RAN network element.

The configuration of scheduling and/or link layer functions includes at least one of the following: setting a scheduling priority weight and hybrid automatic repeat request (Hybrid Automatic Repeat Request, HARQ) target operating point.

In an optional embodiment of this application, the 1st data packet in a data packet set may be one of the following: a data packet with a serial number being the first in the data packet set, and a data packet that arrives first in the data packet set.

In an optional embodiment of this application, the last data packet in the data packet set may be one of the following: a data packet with a serial number being the last in the data packet set and a data packet that arrived last in the data packet set.

In an optional embodiment of this application, a data packet at the tail of the data packet set may be one of the following: a data packet with a serial number being at the tail of the data packet set and a data packet with an arrival time being at the tail in the data packet set.

In an optional embodiment of that present invention, the tunnel include at least one of the following: a session (session) (such as a PDU session or a session between a RAN and a CN), a QoS flow, a QoS sub-flow, an evolved packet system (Evolved Data packet System, EPS) bearer, a PDP context, a data radio bearer (Data Radio Bearer, DRB), a signalling radio bearer (Signalling Radio Bearer, SRB), Internet protocol security (Internet Protocol Security, IPsec) association, and a GPRS tunnelling protocol (GPRS Tunnelling Protocol, GTP) tunnel (tunnel). The tunnel may be instantiated as any of the above types of tunnels.

In an optional embodiment of this application, an N6 interface is an interface between a communication system and a data network (such as a data network outside the communication system).

In an optional embodiment of this application, an N3 interface is a user plane interface between the RAN and the CN.

In an optional embodiment of this application, an N9 interface is a user plane interface between gateways.

In an optional embodiment of this application, a Uu interface is an interface between the terminal and the RAN.

In an optional embodiment of this application, a data flow includes a service data flow (such as a service data flow (service data flow)). A data flow may be referred to as a flow (flow) or a data flow (data flow). Optionally, the data unit is a data unit in a service data flow.

In an optional embodiment of this application, the data unit is also a collection of one or more data packets in the service data flow. Optionally, the data unit has a boundary.

In an optional embodiment of this application, the data unit may be embodied by a data flow, for example, the data unit is described using description information of the data flow.

In an optional embodiment of the present invention, the data unit is an application layer data unit, which is sent by an application client or an application server. A data unit is a collection of one or more data packets.

In an optional embodiment of this application, the data unit or data unit type includes but is not limited to at least one of the following: a group of pictures (Group of pictures, GoP or GOP), a video frame, a video slice (slice), description information of tile (tile), a field of view (Field of View, FOV), a degree of freedom (Degree of Freedom, DoF), an audio frame, and haptic information. A plurality of data unit types are the same (such as a plurality of continuous B frames) or different (such as an I frame, a P frame, and a B frame). A plurality of data unit types are the same (such as a plurality of continuous B frames) or different (such as an I frame, a P frame, and a B frame).
(1) In an implementation, one data unit may include multiple data unit instances. One data unit may be identified by description information of the data unit. A plurality of different data unit instances of a same data unit may be distinguished by boundary information of the data unit (such as a start tag and an end tag).
(2) In an implementation, one data unit type may include multiple data units. The data unit is an instance of the data unit type. One type of data unit may be identified by description information of the data unit. A plurality of different data units of a same data unit type may be distinguished by boundary information (such as a start tag and an end tag) of the data units.

The following describes in detail a data packet set delay processing method and apparatus, and a communication device provided in the embodiments of this application by using some embodiments and application scenarios thereof with reference to the accompanying drawings.

Refer to FIG. 2. An embodiment of this application provides a data packet set delay processing method, applied to a radio access network device. The radio access network device includes but is not limited to a base station. The method includes:
Step 21: The radio access network device performs a first target operation, where the first target operation includes at least one of the following operations:
a first operation corresponding to a data packet set downlink delay;
a second operation corresponding to the data packet set downlink delay;
a first operation corresponding to a data packet set uplink delay;
a second operation corresponding to the data packet set uplink delay;
a first operation corresponding to a data packet set delay; and
a second operation corresponding to the data packet set delay.

In this embodiment of this application, a related operation for monitoring a data packet set downlink delay, uplink delay, and/or round-trip delay by the radio access network device is defined, so as to ensure normal transmission of a data packet set.

Optionally, the first operation corresponding to the data packet set downlink delay includes at least one of the following:
obtaining T1;
recording T21;
obtaining T22;
based on T21-T1, determining a data packet set downlink delay (for example, a value is T21-T1) between the radio access network device and an anchor gateway;
based on T22-T1, determining a data packet set downlink delay (for example, a value is T22-T1) between a terminal and the anchor gateway;
based on T22-T21, determining a data packet set downlink delay (for example, a value is T22-T21) between the terminal and the radio access network device; and
sending determined delay information, where the delay information includes at least one of the following: a data packet set downlink delay between the radio access network device and the anchor gateway, a data packet set downlink delay between the terminal and the anchor gateway, and a data packet set downlink delay between the terminal and the radio access network device.
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device; and
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal.

In an implementation, based on T21-T1 of one data packet set, the data packet set downlink delay between the radio access network device and the anchor gateway is determined, for example, the value is T21-T1.

In an implementation, based on T21-T1 of a plurality of data packet sets, the data packet set downlink delay between the radio access network device and the anchor gateway is determined, for example, the value is an average value of a plurality of T21-T1.

In an implementation, based on T22-T1 of one data packet set, the data packet set downlink delay between the terminal and the anchor gateway is determined, for example, the value is T22-T1.

In an implementation, based on T22-T1 of a plurality of data packet sets, the data packet set downlink delay between the terminal and the anchor gateway is determined, for example, the value is an average value of a plurality of T22-T1.

In an implementation, based on T22-T21 of one data packet set, the data packet set downlink delay between the terminal and the radio access network device is determined, for example, the value is T22-T21.

In an implementation, based on T22-T21 of a plurality of data packet sets, the data packet set downlink delay between the terminal and the radio access network device is determined, for example, the value is an average value of a plurality of T22-T21.

In an implementation, the radio access network device sends the delay information to a sixth target end. The sixth target end includes at least one of the following: a core network device, an AMF, an SMF, a PCF, an NEF, and an AF.

In an implementation, the obtaining T1 includes: obtaining T1 from a data packet (such as header information) of a received first data packet set.

In an implementation, the obtaining T22 includes at least one of the following:
determining a time for sending or successfully sending the last data packet of the first data packet set as T22;
determining a time for receiving an acknowledgement (Acknowledgement, ACK) of the last data packet of the first data packet set from the terminal as T22;
receiving a fourth target data packet, where the fourth target data packet (such as header information) carries T22; and
receiving T22 from a control plane between the terminal and the radio access network device.

Optionally, the second operation corresponding to the data packet set downlink delay includes at least one of the following:
obtaining T1;
recording T21;
obtaining T22;
sending T21 and/or T22 to a first target end;
sending T21 and/or T1 to a second target end;
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
the first target end is one of the following: an N3 interface and an anchor gateway; and
the second target end is one of the following: a Uu interface and a terminal.

In an implementation, the obtaining T1 includes: obtaining T1 from a data packet (such as header information) of a received first data packet set.

In an implementation, the obtaining T22 includes at least one of the following:
determining a time for sending or successfully sending the last data packet of the first data packet set as T22;
determining a time for receiving an ACK of the last data packet of the first data packet set from the terminal as T22;
receiving a fourth target data packet, where the fourth target data packet (such as header information) carries T22; and
receiving T22 from a control plane between the terminal and the radio access network device.

In an implementation, the sending T21 and/or T22 to a first target end includes: sending a first target data packet to the first target end, where the first target data packet (such as header information) carries T21 and/or T22.

In an implementation, the sending T21 and/or T1 to a second target end includes: carrying T21 and/or T1 in a data packet (such as header information) of the first data packet set sent to the second target end.

Optionally, the first operation corresponding to the data packet set uplink delay includes at least one of the following:
obtaining T4;
recording T31;
obtaining T32;
based on T4-T31, determining a data packet set uplink delay (for example, a value is T4-T31) between the radio access network device and an anchor gateway;
based on T4-T32, determining a data packet set uplink delay (for example, a value is T4-T32) between a terminal and the anchor gateway;
based on T31-T32, determining a data packet set uplink delay (for example, a value is T31-T32) between the terminal and the radio access network device; and
sending determined delay information, where the delay information includes at least one of the following: a data packet set uplink delay between the radio access network device and the anchor gateway, a data packet set uplink delay between the terminal and the anchor gateway, and a data packet set uplink delay between the terminal and the radio access network device; where
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

In an implementation, based on T4-T31 of one data packet set, the data packet set uplink delay between the radio access network device and the anchor gateway is determined, for example, the value is T4-T31.

In an implementation, based on T4-T31 of a plurality of data packet sets, the data packet set uplink delay between the radio access network device and the anchor gateway is determined, for example, the value is an average value of a plurality of T4-T31.

In an implementation, based on T4-T32 of one data packet set, the data packet set uplink delay between the terminal and the anchor gateway is determined, for example, the value is T4-T32.

In an implementation, based on T4-T32 of a plurality of data packet sets, the data packet set uplink delay between the terminal and the anchor gateway is determined, for example, the value is an average value of a plurality of T4-T32.

In an implementation, based on T31-T32 of one data packet set, the data packet set uplink delay between the terminal and the radio access network device is determined, for example, the value is T31-T32.

In an implementation, based on T31-T32 of a plurality of data packet sets, the data packet set uplink delay between the terminal and the radio access network device is determined, for example, the value is an average value of a plurality of T3 1-T32.

In an implementation, the delay information is sent to a sixth target end. The sixth target end includes at least one of the following: a core network device, an AMF, an SMF, a PCF, an NEF, and an AF.

In an implementation, the obtaining T32 includes one of the following: obtaining T32 from a data packet (such as header information) of a received second data packet set, and receiving control plane signaling (such as radio resource control (Radio Resource Control, RRC) signaling), where the control plane signaling carries T32.

In an implementation, the obtaining T4 includes: obtaining T4 from a received second target data packet (such as header information).

Optionally, the second operation corresponding to the data packet set uplink delay includes at least one of the following:
recording T31;
obtaining T32;
obtaining T4;
sending T31 and/or T32 to the first target end; and
sending T31 and/or T4 to the second target end; where
the first target end is one of the following: an N3 interface and an anchor gateway;
the second target end is one of the following: a Uu interface and a terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as a non-access stratum (Non-Access Stratum, NAS) or access stratum (Access Stratum, AS)), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

In an implementation, the obtaining T32 includes one of the following: obtaining T32 from a data packet (such as header information) of a received second data packet set, and receiving control plane signaling (such as RRC signaling), where the control plane signaling carries T32.

In an implementation, the obtaining T4 includes: obtaining T4 from a received second target data packet (such as header information).

In an implementation, the sending T31 and/or T32 to the first target end includes: carrying T31 and/or T32 in a data packet (such as header information) of the second data packet set sent to the first target end.

In an implementation, the sending T31 and/or T4 to the second target end includes: a third target data packet to the second target end, where the third target data packet (such as header information) carries T31 and/or T4.

Optionally, the first operation corresponding to the data packet set delay includes at least one of the following:
obtaining T1;
recording T21;
obtaining T22;
obtaining T4;
recording T31;
obtaining T32;
based on (T21-T1+T4-T31)/2, determining a data packet set uplink delay and/or downlink delay (for example, a value is (T21-T1+T4-T31)/2) between the radio access network device and an anchor gateway;
based on (T22-T1+T4-T32)/2, determining a data packet set uplink delay and/or downlink delay (for example, a value is (T22-T1+T4-T32)/2) between a terminal and the anchor gateway;
based on (T22-T21+T32-T31)/2, determining a data packet set uplink delay and/or downlink delay (for example, a value is (T22-T21+T32-T31)/2) between the terminal and the radio access network device;
based on (T21-T1+T4-T31), determining a data packet set round-trip delay (for example, a value is (T21-T1+T4-T31)) between the radio access network device and the anchor gateway;
based on (T22-T1+T4-T32), determining a data packet set round-trip delay (for example, a value is (T22-T1+T4-T32)) between the terminal and the anchor gateway;
based on (T22-T21+T32-T31), determining a data packet set round-trip delay (for example, a value is (T22-T21+T32-T31)) between the terminal and the radio access network device; and
sending determined delay information, where the delay information includes at least one of the following: a data packet set round-trip delay between the radio access network device and the anchor gateway, a data packet set round-trip delay between the terminal and the anchor gateway, and a data packet set round-trip delay between the terminal and radio access network device.

T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as a non-access stratum (Non-Access Stratum, NAS) or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

In an implementation, based on T21-T1 of one data packet set and T4-T31 of another data packet set, a data packet set uplink delay and/or downlink delay between the radio access network device and the anchor gateway is determined, for example, a value is (T21-T1+T4-T31)/2.

In an implementation, based on an average value of T21-T1 of a plurality of data packet sets and an average value of T4-T31 of a plurality of data packet sets, a data packet set uplink delay and/or downlink delay between the radio access network device and the anchor gateway is determined.

In an implementation, based on T22-T1 of one data packet set and T4-T32 of another data packet set, a data packet set uplink delay and/or downlink delay between the terminal and the anchor gateway is determined, for example, a value is (T22-T1+T4-T32)/2.

In an implementation, based on an average value of T22-T1 of a plurality of data packet sets and an average value of T4-T32 of a plurality of data packet sets, a data packet set uplink delay and/or downlink delay between the terminal and the anchor gateway is determined.

In an implementation, based on T22-T21 of one data packet set and T32-T31 of another data packet set, a data packet set uplink delay and/or downlink delay between the terminal and the radio access network device is determined, for example, a value is (T22-T21+T32-T31)/2.

In an implementation, based on an average value of T22-T21 of a plurality of data packet sets and an average value of T32-T31 of a plurality of data packet sets, a data packet set uplink delay and/or downlink delay between the terminal and the radio access network device is determined.

In an implementation, based on T21-T1 of one data packet set and T4-T31 of another data packet set, a data packet set round-trip delay between the radio access network device and the anchor gateway is determined, for example, a value is (T21-T1+T4-T31).

In an implementation, based on an average value of T21-T1 of a plurality of data packet sets and an average value of T4-T31 of a plurality of data packet sets, a data packet set round-trip delay between the radio access network device and the anchor gateway is determined, for example, a value is (T21-T1+T4-T31).

In an implementation, based on T22-T1 of one data packet set and T4-T32 of another data packet set, a data packet set round-trip delay between the terminal and the anchor gateway is determined, for example, a value is (T22-T1+T4-T32).

In an implementation, based on an average value of T22-T1 of a plurality of data packet sets and an average value of T4-T32 of a plurality of data packet sets, a data packet set round-trip delay between the terminal and the anchor gateway is determined.

In an implementation, based on T22-T21 of one data packet set and T32-T31 of another data packet set, a data packet set round-trip delay between the terminal and the radio access network device is determined, for example, a value is (T22-T21+T32-T31).

In an implementation, based on an average value of T22-T21 of a plurality of data packet sets and an average value of T32-T31 of a plurality of data packet sets, a data packet set round-trip delay between the terminal and the radio access network device is determined.

In an implementation, the delay information is sent to a sixth target end. The sixth target end includes at least one of the following: a core network device, an AMF, an SMF, a PCF, an NEF, and an AF.

In an implementation, the obtaining T1 includes: obtaining T1 from a data packet (such as header information) of a received first data packet set.

In an implementation, the obtaining T22 includes at least one of the following:
determining a time for sending or successfully sending the last data packet of the first data packet set as T22;
determining a time for receiving an ACK of the last data packet of the first data packet set from the terminal as T22;
receiving a fourth target data packet, where the fourth target data packet (such as header information) carries T22; and
receiving T22 from a control plane between the terminal and the radio access network device.

In an implementation, the obtaining T32 includes one of the following: obtaining T32 from a data packet (such as header information) of a received second data packet set, and receiving control plane signaling (such as RRC signaling), where the control plane signaling carries T32.

In an implementation, the obtaining T4 includes: obtaining T4 from a received second target data packet (such as header information).

Optionally, the second operation corresponding to the data packet set delay includes at least one of the following:
obtaining T1;
recording T21;
obtaining T22;
recording T31;
obtaining T32;
obtaining T4;
sending T21 and/or T22 to a first target end;
sending T21 and/or T1 to a second target end;
sending T31 and/or T32 to the first target end; and
sending T31 and/or T4 to the second target end.

The first target end is one of the following: an N3 interface and an anchor gateway;
the second target end is one of the following: a Uu interface and a terminal;
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

In an implementation, the delay information is sent to a sixth target end. The sixth target end includes at least one of the following: a core network device, an AMF, an SMF, a PCF, an NEF, and an AF.

In an implementation, the obtaining T1 includes: obtaining T1 from a data packet (such as header information) of a received first data packet set.

In an implementation, the obtaining T22 includes at least one of the following:
determining a time for sending or successfully sending the last data packet of the first data packet set as T22;
determining a time for receiving an ACK of the last data packet of the first data packet set from the terminal as T22;
receiving a fourth target data packet, where the fourth target data packet (such as header information) carries T22; and
receiving T22 from a control plane between the terminal and the radio access network device.

In an implementation, the obtaining T32 includes one of the following: obtaining T32 from a data packet (such as header information) of a received second data packet set, and receiving control plane signaling (such as RRC signaling), where the control plane signaling carries T32.

In an implementation, the obtaining T4 includes: obtaining T4 from a received second target data packet (such as header information).

In an implementation, the sending T31 and/or T32 to the first target end includes: carrying T31 and/or T32 in a data packet (such as header information) of the second data packet set sent to the first target end.

In an implementation, the sending T31 and/or T4 to the second target end includes: a third target data packet to the second target end, where the third target data packet (such as header information) carries T31 and/or T4.

In an implementation, the sending T21 and/or T22 to a first target end includes: sending a first target data packet to the first target end, where the first target data packet (such as header information) carries T21 and/or T22.

In an implementation, the sending T21 and/or T1 to a second target end includes: carrying T21 and/or T1 in a data packet (such as header information) of the first data packet set sent to the second target end.

Optionally, the sending T21 and/or T22 to a first target end includes: sending a first target data packet to the first target end, where the first target data packet (such as header information) carries T21 and/or T22;
and/or
the sending T21 and/or T1 to a second target end includes: carrying T21 and/or T1 in a data packet (such as header information) of the first data packet set sent to the second target end; where
the first target data packet is one of the following: a forged data packet, an uplink real data packet, and a data packet in an uplink data packet set.

Optionally, the sending T31 and/or T32 to the first target end includes: carrying T31 and/or T32 in a data packet (such as header information) of the second data packet set sent to the first target end;
and/or
the sending T31 and/or T4 to the second target end includes: sending a third target data packet to the second target end, where the third target data packet (such as header information) carries T31 and/or T4; where
the third target data packet is one of the following: a forged data packet, a downlink real data packet, and a data packet in a downlink data packet set.

In an implementation, the second data packet set may be any one data packet set or any one data packet set instance in the uplink direction.

In an implementation, the data packet of the second data packet set may be one of the following: the 1st data packet of the second data packet set, any one data packet of the second data packet set, and one or more data packets in the second data packet set.

Optionally, the obtaining T32 includes one of the following: obtaining T32 from a data packet (such as header information) of a received second data packet set, and receiving control plane signaling (such as RRC signaling), where the control plane signaling carries T32;
and/or
the obtaining T4 includes: obtaining T4 from a received second target data packet (such as header information); where
the second target data packet is one of the following: a forged data packet, a downlink real data packet, and a data packet in a downlink data packet set.

Optionally, the obtaining T1 includes: obtaining T1 from a data packet (such as header information) of a received first data packet set;
and/or
the obtaining T22 includes at least one of the following:
determining a time for sending or successfully sending the last data packet of the first data packet set as T22;
determining a time for receiving an ACK of the last data packet of the first data packet set from the terminal as T22;
receiving a fourth target data packet, where the fourth target data packet (such as header information) carries T22; and
receiving T22 from a control plane between the terminal and the radio access network device; where
the fourth target data packet is one of the following: a forged data packet, an uplink real data packet, and a data packet in an uplink data packet set.

In an implementation, the first data packet set may be any one data packet set or any one data packet set instance in the downlink direction.

In an implementation, the data packet of the first data packet set may be one of the following: the 1st data packet of the first data packet set, any one data packet of the first data packet set, and one or more data packets in the first data packet set.

Optionally, the first target data packet further includes identification information of the first data packet set; where
the identification information includes at least one of the following: an identifier of a data packet set and a serial number of the data packet set;
   and/or
the second target data packet further includes identification information of the second data packet set; where
the identification information includes at least one of the following: an identifier of a data packet set and a serial number of the data packet set;
   and/or
the third target data packet further includes identification information of the second data packet set; where
the identification information includes at least one of the following: an identifier of a data packet set and a serial number of the data packet set;
   and/or
the fourth target data packet further includes identification information of the second data packet set; where
the identification information includes at least one of the following: an identifier of a data packet set and a serial number of the data packet set.

Optionally, the performing, by a radio access network device, a first target operation includes:
obtaining, by the radio access network device, a data packet set delay monitoring requirement; and
performing, by the radio access network device, the first target operation according to the data packet set delay monitoring requirement.

Optionally, the data packet set delay monitoring requirement includes at least one of the following: a type of delay monitoring and a granularity of delay monitoring.

Optionally, the type of delay monitoring includes at least one of the following: a data packet set downlink delay, a data packet set uplink delay, and a data packet set round-trip delay.

Optionally, the data packet set downlink delay includes at least one of the following: a data packet set downlink delay between the radio access network device and an anchor gateway, a data packet set downlink delay between a terminal and the anchor gateway, and a data packet set downlink delay between the terminal and the radio access network device; where
the data packet set downlink delay between the radio access network device and the anchor gateway is used to indicate a time required for transmission of one data packet set from the anchor gateway to the radio access network device;
the data packet set downlink delay between the terminal and the anchor gateway is used to indicate a time required for transmission of one data packet set from the anchor gateway to the terminal; and
the data packet set downlink delay between the terminal and the radio access network device is used to indicate a time required for transmission of one data packet set from the radio access network device to the terminal.

Optionally, the data packet set uplink delay includes at least one of the following: a data packet set uplink delay between the radio access network device and an anchor gateway, a data packet set uplink delay between a terminal and the anchor gateway, and a data packet set uplink delay between the terminal and the radio access network device; where
the data packet set uplink delay between the radio access network device and the anchor gateway is used to indicate a time required for transmission of one data packet set from the radio access network device to the anchor gateway;
the data packet set uplink delay between the terminal and the anchor gateway is used to indicate a time required for transmission of one data packet set from the terminal to the anchor gateway; and
the data packet set uplink delay between the terminal and the radio access network device is used to indicate a time required for transmission of one data packet set from the terminal to the radio access network device.

Optionally, the data packet set round-trip delay includes at least one of the following: a data packet set round-trip delay between the radio access network device and an anchor gateway, a data packet set round-trip delay between a terminal and the anchor gateway, and a data packet set round-trip delay between the terminal and the radio access network device; where
the data packet set round-trip delay between the radio access network device and the anchor gateway is used to indicate: a time required for round-trip transmission of one data packet set between radio access network device and the anchor gateway;
the data packet set round-trip delay between the terminal and the anchor gateway is used to indicate: a time required for round-trip transmission of one data packet set between the terminal and the anchor gateway; and
the data packet set round-trip delay between the terminal and the radio access network device is used to indicate a time required for round-trip transmission of one data packet set between the terminal and the radio access network device.

Optionally, the granularity of delay monitoring includes at least one of the following: a terminal granularity, a flow granularity, a radio bearer granularity, and a data packet set granularity.

In this embodiment of this application, a related operation for monitoring a data packet set downlink delay, uplink delay, and/or round-trip delay by the radio access network device is defined, so as to ensure normal transmission of a data packet set.

Refer to FIG. 3. An embodiment of this application provides a data packet set delay processing method, applied to an anchor gateway. The anchor gateway may be, for example, a UPF. The method includes the following step.

Step 31: The anchor gateway performs a second target operation, where the second target operation includes at least one of the following:
a third operation corresponding to a data packet set downlink delay;
a fourth operation corresponding to the data packet set downlink delay;
a third operation corresponding to a data packet set uplink delay;
a fourth operation corresponding to the data packet set uplink delay;
a third operation corresponding to a data packet set delay; and
a fourth operation corresponding to the data packet set delay.

In this embodiment of this application, a related operation for monitoring a data packet set downlink delay, uplink delay, and/or round-trip delay by the anchor gateway is defined, so as to ensure normal transmission of a data packet set.

Optionally, the third operation corresponding to the data packet set downlink delay includes at least one of the following:
recording T1;
obtaining T21 and/or T22;
based on T21-T1, determining a data packet set downlink delay (for example, a value is T21-T1) between the radio access network device and an anchor gateway;
based on T22-T1, determining a data packet set downlink delay (for example, a value is T22-T1) between a terminal and the anchor gateway;
based on T22-T21, determining a data packet set downlink delay (for example, a value is T22-T21) between the terminal and the radio access network device; and
sending determined delay information, where the delay information includes at least one of the following: a data packet set downlink delay between the radio access network device and the anchor gateway, a data packet set downlink delay between the terminal and the anchor gateway, and a data packet set downlink delay between the terminal and the radio access network device.
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device; and
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal.

In an implementation, the delay information is sent to a sixth target end. The sixth target end includes at least one of the following: a core network device, an AMF, an SMF, a PCF, an NEF, and an AF.

In an implementation, the obtaining T21 and/or T22 includes at least one of the following:
obtaining T21 and/or T22 from a received first target data packet (such as header information); and
obtaining T21 and/or T22 from a received fifth target data packet (such as header information).

Optionally, the fourth operation corresponding to the data packet set downlink delay includes at least one of the following:
recording T1;
sending T1 to a third target end; and
sending T1 to a fourth target end; where
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
the third target end is one of the following: an N3 interface, an N9 interface, and a radio access network device; and
the fourth target end is one of the following: a terminal.

In an implementation, the sending T1 to a third target end includes: carrying T1 in a data packet (such as header information) of the first data packet set sent to the third target end.

In an implementation, the sending T1 to a fourth target end includes: carrying T1 in a data packet (such as header information) of the first data packet set sent to the fourth target end.

Optionally, the third operation corresponding to the data packet set uplink delay includes at least one of the following:
recording T4;
obtaining T31 and/or T32;
based on T4-T31, determining a data packet set uplink delay (for example, a value is T4-T31) between a radio access network device and the anchor gateway;
based on T4-T32, determining a data packet set uplink delay (for example, a value is T4-T32) between a terminal and the anchor gateway;
based on T31-T32, determining a data packet set uplink delay (for example, a value is T31-T32) between the terminal and the radio access network device; and
sending determined delay information, where the delay information includes at least one of the following: a data packet set uplink delay between the radio access network device and the anchor gateway, a data packet set uplink delay between the terminal and the anchor gateway, and a data packet set uplink delay between the terminal and the radio access network device; where
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

In an implementation, the delay information is sent to a sixth target end. The sixth target end includes at least one of the following: a core network device, an AMF, an SMF, a PCF, an NEF, and an AF.

In an implementation, the obtaining T31 and/or T32 includes: obtaining T31 and/or T32 from a data packet of a received second data packet set.

Optionally, the fourth operation corresponding to the data packet set uplink delay includes at least one of the following:
recording T4;
sending T4 to a third target end; and
sending T4 to a fourth target end; where
the third target end is one of the following: an N3 interface, an N9 interface, and a radio access network device; and
the fourth target end is one of the following: a terminal; where
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

In an implementation, the sending T4 to the third target end includes: sending a second target data packet to the third target end, where the second target data packet carries T4.

In an implementation, the sending T4 to the fourth target end includes: sending a sixth target data packet to the fourth target end, where the sixth target data packet carries T4.

Optionally, the third operation corresponding to the data packet set delay includes at least one of the following:
recording T1;
obtaining T21 and/or T22;
recording T4;
obtaining T31 and/or T32;
based on (T21-T1+T4-T31)/2, determining a data packet set uplink delay and/or downlink delay (for example, a value is (T21-T1+T4-T31)/2) between the radio access network device and an anchor gateway;
based on (T22-T1+T4-T32)/2, determining a data packet set uplink delay and/or downlink delay (for example, a value is (T22-T1+T4-T32)/2) between a terminal and the anchor gateway;
based on (T22-T21+T32-T31)/2, determining a data packet set uplink delay and/or downlink delay (for example, a value is (T22-T21+T32-T31)/2) between the terminal and the radio access network device;
based on (T21-T1+T4-T31), determining a data packet set round-trip delay (for example, a value is (T21-T1+T4-T31)) between the radio access network device and the anchor gateway;
based on (T22-T1+T4-T32), determining a data packet set round-trip delay (for example, a value is (T22-T1+T4-T32)) between the terminal and the anchor gateway;
based on (T22-T21+T32-T31), determining a data packet set round-trip delay (for example, a value is (T22-T21+T32-T31)) between the terminal and the radio access network device; and
sending determined delay information, where the delay information includes at least one of the following: a data packet set round-trip delay between the radio access network device and the anchor gateway, a data packet set round-trip delay between the terminal and the anchor gateway, and a data packet set round-trip delay between the terminal and radio access network device; where
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

In an implementation, the delay information is sent to a sixth target end. The sixth target end includes at least one of the following: a core network device, an AMF, an SMF, a PCF, an NEF, and an AF.

In an implementation, the obtaining T21 and/or T22 includes at least one of the following:
obtaining T21 and/or T22 from a received first target data packet (such as header information); and
obtaining T21 and/or T22 from a received fifth target data packet (such as header information).

In an implementation, the obtaining T31 and/or T32 includes: obtaining T31 and/or T32 from a data packet of a received second data packet set.

Optionally, the obtaining T21 and/or T22 includes at least one of the following:
obtaining T21 and/or T22 from a received first target data packet (such as header information); and
obtaining T21 and/or T22 from a received fifth target data packet (such as header information).

The first target data packet is one of the following: a forged data packet, an uplink real data packet, and a data packet in an uplink data packet set; and
the fifth target data packet is one of the following: a forged data packet, an uplink real data packet, and a data packet in an uplink data packet set.

In an implementation, the first target data packet is sent by the RAN.

In an implementation, the fifth target data packet is sent by the terminal.

Optionally, the obtaining T31 and/or T32 includes:
obtaining T31 and/or T32 from a data packet of a received second data packet set.

In an implementation, the second data packet set may be any one data packet set or any one data packet set instance in the uplink direction.

In an implementation, the data packet of the second data packet set may be one of the following: the 1st data packet of the second data packet set, any one data packet of the second data packet set, and one or more data packets in the second data packet set.

Optionally, the fourth operation corresponding to the data packet set delay includes at least one of the following:
recording T1;
sending T1 to a third target end;
sending T1 to a fourth target end;
recording T4;
sending T4 to the third target end; and
sending T4 to the fourth target end; where
the third target end is one of the following: an N3 interface, an N9 interface, and a radio access network device; and
the fourth target end is one of the following: a terminal; where
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

In an implementation, the sending T1 to a third target end includes: carrying T1 in a data packet (such as header information) of the first data packet set sent to the third target end.

In an implementation, the sending T1 to a fourth target end includes: carrying T1 in a data packet (such as header information) of the first data packet set sent to the fourth target end.

In an implementation, the sending T4 to the third target end includes: sending a second target data packet to the third target end, where the second target data packet carries T4.

In an implementation, the sending T4 to the fourth target end includes: sending a sixth target data packet to the fourth target end, where the sixth target data packet carries T4.

In an implementation, information sent to the fourth target end is forwarded through the third target end. For example, for information to be sent to the terminal, the information needs to be sent to the radio access network device, and then the radio access network device forwards it to the terminal.

Optionally, the sending T1 to a third target end includes: carrying T1 in a data packet (such as header information) of the first data packet set sent to the third target end;
and/or
the sending T1 to a fourth target end includes: carrying T1 in a data packet (such as header information) of the first data packet set sent to the fourth target end.

In an implementation, the first data packet set may be any one data packet set or any one data packet set instance in the downlink direction.

In an implementation, the data packet of the first data packet set may be one of the following: the 1st data packet of the first data packet set, any one data packet of the first data packet set, and one or more data packets in the first data packet set.

Optionally, the sending T4 to the third target end includes: sending a second target data packet to the third target end, where the second target data packet carries T4;
and/or
the sending T4 to the fourth target end includes: sending a sixth target data packet to the fourth target end, where the sixth target data packet carries T4; where
the second target data packet is one of the following: a forged data packet, a downlink real data packet, and a data packet in a downlink data packet set.

Optionally, the first target data packet further includes identification information of the first data packet set; where
the identification information includes at least one of the following: an identifier of a data packet set and a serial number of the data packet set;
   and/or
the fifth target data packet further includes identification information of the first data packet set; where
the identification information includes at least one of the following: an identifier of a data packet set and a serial number of the data packet set;
   and/or
the second target data packet further includes identification information of the second data packet set; where
the identification information includes at least one of the following: an identifier of a data packet set and a serial number of the data packet set;
   and/or
the sixth target data packet further includes identification information of the second data packet set; where
the identification information includes at least one of the following: an identifier of a data packet set and a serial number of the data packet set.

Optionally, the performing, by an anchor gateway, a second target operation includes:
obtaining, by the anchor gateway, a data packet set delay monitoring requirement; and
performing, by the anchor gateway, the second target operation according to the data packet set delay monitoring requirement.

Optionally, the data packet set delay monitoring requirement includes at least one of the following: a type of delay monitoring and a granularity of delay monitoring.

Optionally, the type of delay monitoring includes at least one of the following: a data packet set downlink delay, a data packet set uplink delay, and a data packet set round-trip delay.

Optionally, the data packet set downlink delay includes at least one of the following: a data packet set downlink delay between the radio access network device and an anchor gateway, a data packet set downlink delay between a terminal and the anchor gateway, and a data packet set downlink delay between the terminal and the radio access network device; where
the data packet set downlink delay between the radio access network device and the anchor gateway is used to indicate a time required for transmission of one data packet set from the anchor gateway to the radio access network device;
the data packet set downlink delay between the terminal and the anchor gateway is used to indicate a time required for transmission of one data packet set from the anchor gateway to the terminal; and
the data packet set downlink delay between the terminal and the radio access network device is used to indicate a time required for transmission of one data packet set from the radio access network device to the terminal.

Optionally, the data packet set uplink delay includes at least one of the following: a data packet set uplink delay between the radio access network device and an anchor gateway, a data packet set uplink delay between a terminal and the anchor gateway, and a data packet set uplink delay between the terminal and the radio access network device; where
the data packet set uplink delay between the radio access network device and the anchor gateway is used to indicate a time required for transmission of one data packet set from the radio access network device to the anchor gateway;
the data packet set uplink delay between the terminal and the anchor gateway is used to indicate a time required for transmission of one data packet set from the terminal to the anchor gateway; and
the data packet set uplink delay between the terminal and the radio access network device is used to indicate a time required for transmission of one data packet set from the terminal to the radio access network device.

Optionally, the data packet set round-trip delay includes at least one of the following: a data packet set round-trip delay between the radio access network device and an anchor gateway, a data packet set round-trip delay between a terminal and the anchor gateway, and a data packet set round-trip delay between the terminal and the radio access network device; where
the data packet set round-trip delay between the radio access network device and the anchor gateway is used to indicate: a time required for round-trip transmission of one data packet set between radio access network device and the anchor gateway;
the data packet set round-trip delay between the terminal and the anchor gateway is used to indicate: a time required for round-trip transmission of one data packet set between the terminal and the anchor gateway; and
the data packet set round-trip delay between the terminal and the radio access network device is used to indicate a time required for round-trip transmission of one data packet set between the terminal and the radio access network device.

Optionally, the granularity of delay monitoring includes at least one of the following: a terminal granularity, a flow granularity, a radio bearer granularity, and a data packet set granularity.

In this embodiment of this application, a related operation for monitoring a data packet set downlink delay, uplink delay, and/or round-trip delay by the anchor gateway is defined, so as to ensure normal transmission of a data packet set.

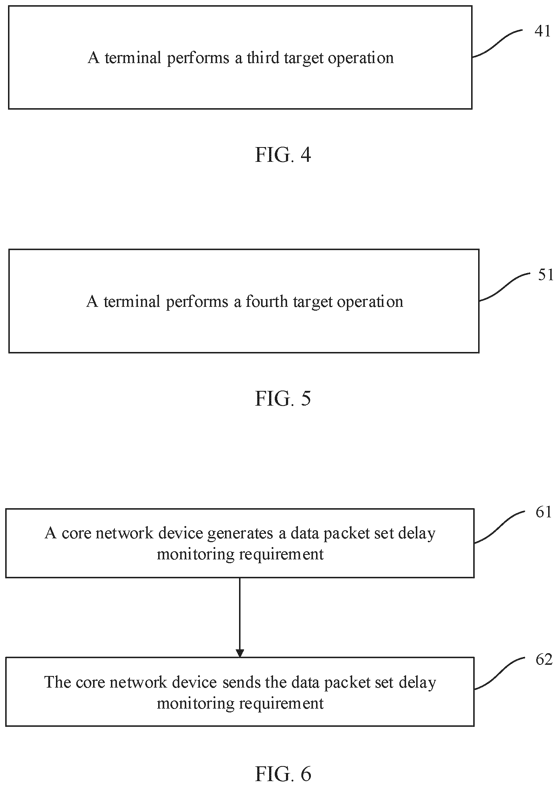

Refer to FIG. 4. An embodiment of this application provides a data packet set delay processing method, applied to a terminal. The method includes the following step.

Step 41: The terminal performs a third target operation, where the third target operation includes at least one of the following operations:
a fifth operation corresponding to a data packet set downlink delay;
a sixth operation corresponding to the data packet set downlink delay;
a fifth operation corresponding to a data packet set uplink delay;
a sixth operation corresponding to the data packet set uplink delay;
a fifth operation corresponding to a data packet set delay; and
a sixth operation corresponding to the data packet set delay.

In this embodiment of this application, a related operation for monitoring a data packet set downlink delay, uplink delay, and/or round-trip delay by the terminal is defined, so as to ensure normal transmission of a data packet set.

Optionally, the fifth operation corresponding to the data packet set downlink delay includes at least one of the following:
obtaining T1 and/or T21;
recording T22;
based on T21-T1, determining a data packet set downlink delay (for example, a value is T21-T1) between a radio access network device and an anchor gateway;
based on T22-T1, determining a data packet set downlink delay (for example, a value is T22-T1) between the terminal and the anchor gateway;
based on T22-T21, determining a data packet set downlink delay (for example, a value is T22-T21) between the terminal and the radio access network device; and
sending determined delay information, where the delay information includes at least one of the following: a data packet set downlink delay between the radio access network device and the anchor gateway, a data packet set downlink delay between the terminal and the anchor gateway, and a data packet set downlink delay between the terminal and the radio access network device; where
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device; and
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal.

In an implementation, the delay information is sent to a seventh target end. The seventh target end includes at least one of the following: a core network device, a first communication device, an RAN, an AMF, an SMF, a PCF, an NEF, and an AF.

In an implementation, the obtaining T1 and/or T21 includes: obtaining T1 and/or T21 from a data packet of a received first data packet set.

Optionally, the sixth operation corresponding to the data packet set downlink delay includes at least one of the following:
recording T22;
obtaining T21;
sending T22 to a fifth target end; and
sending T22 and/or T21 to an anchor gateway; where
T21 is one of the following: a time at which the radio access network device receives the last data packet of a first data packet set, and a time at which the last data packet of the first data packet set arrives at the radio access network device;
and/or
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal; where
the fifth target end includes one of the following: a radio access network device and a Uu interface.

In an implementation, the obtaining T21 includes: obtaining T21 from a data packet of a received first data packet set.

In an implementation, the sending T22 to the fifth target end includes at least one of the following:
sending a fourth target data packet to the fifth target end, where the fourth target data packet carries T22; and
sending control plane signaling (such as RRC signaling) to the fifth target end, where the control plane signaling carries T22.

In an implementation, the sending T22 and/or T21 to an anchor gateway includes: sending a fifth target data packet to the anchor gateway, where the fifth target data packet carries T22 and/or T21.

Optionally, the fifth operation corresponding to the data packet set uplink delay includes at least one of the following:
obtaining T4;
obtaining T31;
recording T32;
based on T4-T31, determining a data packet set uplink delay (for example, a value is T4-T31) between a radio access network device and an anchor gateway;
based on T4-T32, determining a data packet set uplink delay (for example, a value is T4-T32) between the terminal and the anchor gateway;
based on T31-T32, determining a data packet set uplink delay (for example, a value is T31-T32) between the terminal and the radio access network device; and
sending determined delay information, where the delay information includes at least one of the following: a data packet set uplink delay between the radio access network device and the anchor gateway, a data packet set uplink delay between the terminal and the anchor gateway, and a data packet set uplink delay between the terminal and the radio access network device; where
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

In an implementation, the terminal sends the delay information to a seventh target end. The seventh target end includes at least one of the following: a core network device, a first communication device, an RAN, an AMF, an SMF, a PCF, an NEF, and an AF.

In an implementation, the obtaining T31 includes: obtaining T31 from the received third target data packet.

In an implementation, the obtaining T4 includes: obtaining T4 from the received third target data packet and/or sixth target data packet.

Optionally, the sixth operation corresponding to the data packet set uplink delay includes at least one of the following:
recording T32; and
sending T32; where
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device.

In an implementation, the sending T32 includes one of the following:
carrying T32 in a data packet of a transmitted second data packet set; and
sending control plane signaling (such as RRC signaling) to the fifth target end, where the control plane signaling carries T32.

Optionally, the fifth operation corresponding to the data packet set delay includes at least one of the following:
obtaining T1 and/or T21;
recording T22;
obtaining T4;
recording T32;
obtaining T31;
based on (T21-T1+T4-T31)/2, determining a data packet set uplink delay and/or downlink delay (for example, a value is (T21-T1+T4-T31)/2) between the radio access network device and an anchor gateway;
based on (T22-T1+T4-T32)/2, determining a data packet set uplink delay and/or downlink delay (for example, a value is (T22-T1+T4-T32)/2) between a terminal and the anchor gateway;
based on (T22-T21+T32-T31)/2, determining a data packet set uplink delay and/or downlink delay (for example, a value is (T22-T21+T32-T31)/2) between the terminal and the radio access network device;
based on (T21-T1+T4-T31), determining a data packet set round-trip delay (for example, a value is (T21-T1+T4-T31)) between the radio access network device and the anchor gateway;
based on (T22-T1+T4-T32), determining a data packet set round-trip delay (for example, a value is (T22-T1+T4-T32)/2) between the terminal and the anchor gateway;
based on (T22-T21+T32-T31), determining a data packet set round-trip delay (for example, a value is (T22-T21+T32-T31)) between the terminal and the radio access network device; and
sending determined delay information, where the delay information includes at least one of the following: a data packet set round-trip delay between the radio access network device and the anchor gateway, a data packet set round-trip delay between the terminal and the anchor gateway, and a data packet set round-trip delay between the terminal and radio access network device; where
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

In an implementation, the obtaining T1 and/or T21 includes: obtaining T1 and/or T21 from a data packet of a received first data packet set.

In an implementation, the obtaining T31 includes: obtaining T31 from the received third target data packet.

In an implementation, the obtaining T4 includes: obtaining T4 from the received third target data packet and/or sixth target data packet.

Optionally, the obtaining T1 and/or T21 includes:
obtaining T1 and/or T21 from a data packet of a received first data packet set.

In an implementation, the first data packet set may be any one data packet set or any one data packet set instance in the downlink direction.

In an implementation, the data packet of the first data packet set may be one of the following: the 1st data packet of the first data packet set, any one data packet of the first data packet set, and one or more data packets in the first data packet set.

Optionally, the obtaining T4 includes: obtaining T4 from the received third target data packet and/or sixth target data packet; where
the third target data packet is one of the following: a forged data packet, a downlink real data packet, and a data packet in a downlink data packet set; where
the sixth target data packet is one of the following: a forged data packet, a downlink real data packet, and a data packet in a downlink data packet set;
   and/or
the obtaining T31 includes obtaining T31 from the received third target data packet; and
the third target data packet is one of the following: a forged data packet, a downlink real data packet, and a data packet in a downlink data packet set.

Optionally, the sixth operation corresponding to the data packet set delay includes at least one of the following:
recording T32;
sending T32;
recording T22;
obtaining T21;
sending T22 to a fifth target end; and
sending T22 and/or T21 to an anchor gateway; where
T22 is one of the following: a time at which a radio access network device sends the last data packet of a first data packet set to the terminal, a time at which the terminal receives or successfully receives the last data packet of the first data packet set, and a time at which the last data packet of the first data packet set arrives at the terminal;
T32 ...; and
the fifth target end includes one of the following: a radio access network device and a Uu interface.

In an implementation, the obtaining T21 includes: obtaining T21 from a data packet of a received first data packet set.

In an implementation, the sending T32 includes one of the following:
carrying T32 in a data packet of a transmitted second data packet set; and
sending control plane signaling (such as RRC signaling) to the fifth target end, where the control plane signaling carries T32.

In an implementation, the sending T22 to the fifth target end includes at least one of the following:
sending a fourth target data packet to the fifth target end, where the fourth target data packet carries T22; and
sending control plane signaling (such as RRC signaling) to the fifth target end, where the control plane signaling carries T22.

In an implementation, the sending T22 and/or T21 to an anchor gateway includes:
sending a fifth target data packet to the anchor gateway, where the fifth target data packet carries T22 and/or T21.

Optionally, the obtaining T21 includes: obtaining T21 from a data packet of a received first data packet set;
and/or
the sending T22 to the fifth target end includes at least one of the following:
sending a fourth target data packet to the fifth target end, where the fourth target data packet carries T22; and
sending control plane signaling (such as RRC signaling) to the fifth target end, where the control plane signaling carries T22; where
the fourth target data packet is one of the following: a forged data packet, an uplink real data packet, and a data packet in an uplink data packet set;
   and/or
the sending T22 and/or T21 to an anchor gateway includes:
   sending a fifth target data packet to the anchor gateway, where the fifth target data packet carries T22 and/or T21; where
   the fifth target data packet is one of the following: a forged data packet, an uplink real data packet, and a data packet in an uplink data packet set.

In an implementation, the first data packet set may be any one data packet set or any one data packet set instance in the downlink direction.

In an implementation, the data packet of the first data packet set may be one of the following: the 1st data packet of the first data packet set, any one data packet of the first data packet set, and one or more data packets in the first data packet set.

Optionally, the sending T32 includes one of the following:
carrying T32 in a data packet of a transmitted second data packet set; and
sending control plane signaling (such as RRC signaling) to the fifth target end, where the control plane signaling carries T32.

In an implementation, the second data packet set may be any one data packet set or any one data packet set instance in the uplink direction.

In an implementation, the data packet of the second data packet set may be one of the following: the 1st data packet of the second data packet set, any one data packet of the second data packet set, and one or more data packets in the second data packet set.

Optionally, the third target data packet further includes identification information of the second data packet set; where
the identification information includes at least one of the following: an identifier of a data packet set and a serial number of the data packet set;
   and/or
the sixth target data packet further includes identification information of the second data packet set; where
the identification information includes at least one of the following: an identifier of a data packet set and a serial number of the data packet set;
   and/or
the fourth target data packet further includes identification information of the second data packet set; where
the identification information includes at least one of the following: an identifier of a data packet set and a serial number of the data packet set;
   and/or
the fifth target data packet further includes identification information of the second data packet set; where
the identification information includes at least one of the following: an identifier of a data packet set and a serial number of the data packet set.

Optionally, the performing, by a terminal, a third target operation includes:
obtaining, by the terminal, a data packet set delay monitoring requirement; and
performing, by the terminal, the third target operation according to the data packet set delay monitoring requirement.

Optionally, the data packet set delay monitoring requirement includes at least one of the following: a type of delay monitoring and a granularity of delay monitoring.

Optionally, the type of delay monitoring includes at least one of the following: a data packet set downlink delay, a data packet set uplink delay, and a data packet set round-trip delay.

Optionally, the data packet set downlink delay includes at least one of the following: a data packet set downlink delay between the radio access network device and an anchor gateway, a data packet set downlink delay between a terminal and the anchor gateway, and a data packet set downlink delay between the terminal and the radio access network device; where
the data packet set downlink delay between the radio access network device and the anchor gateway is used to indicate a time required for transmission of one data packet set from the anchor gateway to the radio access network device;
the data packet set downlink delay between the terminal and the anchor gateway is used to indicate a time required for transmission of one data packet set from the anchor gateway to the terminal; and
the data packet set downlink delay between the terminal and the radio access network device is used to indicate a time required for transmission of one data packet set from the radio access network device to the terminal.

Optionally, the data packet set uplink delay includes at least one of the following: a data packet set uplink delay between the radio access network device and an anchor gateway, a data packet set uplink delay between a terminal and the anchor gateway, and a data packet set uplink delay between the terminal and the radio access network device; where
the data packet set uplink delay between the radio access network device and the anchor gateway is used to indicate a time required for transmission of one data packet set from the radio access network device to the anchor gateway;
the data packet set uplink delay between the terminal and the anchor gateway is used to indicate a time required for transmission of one data packet set from the terminal to the anchor gateway; and
the data packet set uplink delay between the terminal and the radio access network device is used to indicate a time required for transmission of one data packet set from the terminal to the radio access network device.

Optionally, the data packet set round-trip delay includes at least one of the following: a data packet set round-trip delay between the radio access network device and an anchor gateway, a data packet set round-trip delay between a terminal and the anchor gateway, and a data packet set round-trip delay between the terminal and the radio access network device; where
the data packet set round-trip delay between the radio access network device and the anchor gateway is used to indicate: a time required for round-trip transmission of one data packet set between radio access network device and the anchor gateway;
the data packet set round-trip delay between the terminal and the anchor gateway is used to indicate: a time required for round-trip transmission of one data packet set between the terminal and the anchor gateway; and
the data packet set round-trip delay between the terminal and the radio access network device is used to indicate a time required for round-trip transmission of one data packet set between the terminal and the radio access network device.

Optionally, the granularity of delay monitoring includes at least one of the following: a terminal granularity, a flow granularity, a radio bearer granularity, and a data packet set granularity.

In this embodiment of this application, a related operation for monitoring a data packet set downlink delay, uplink delay, and/or round-trip delay by the terminal is defined, so as to ensure normal transmission of a data packet set.

Refer to FIG. 5. An embodiment of this application provides a data packet set delay processing method, applied to a terminal. The method includes the following step.

Step 51: The terminal performs a fourth target operation, where the fourth target operation includes at least one of the following operations:
recording T22;
recording T32;
sending T32 to a fifth target end;
sending T32 to an anchor gateway;
sending T22 to the fifth target end; and
sending T22 to the anchor gateway; where
T22 is one of the following: a time at which a radio access network device sends the last data packet of a first data packet set to the terminal, a time at which the terminal receives or successfully receives the last data packet of the first data packet set, and a time at which the last data packet of the first data packet set arrives at the terminal; and
T32 is one of the following: a time at which the terminal starts to wait for the radio access network device to schedule the 1st data packet of a second data packet set, a time at which the 1st data packet of the second data packet set arrives at the terminal (such as an NAS or AS), and a time at which the terminal sends the 1st data packet of the second data packet set to the radio access network device; where
the fifth target end includes one of the following: a radio access network device and a Uu interface.

In this embodiment of this application, a related operation for monitoring a data packet set downlink delay, uplink delay, and/or round-trip delay by the terminal is defined, so as to ensure normal transmission of a data packet set.

In an implementation, T32 and/or T22 is sent to a radio access network device and/or an anchor gateway.

The first data packet set may be any one data packet set or any one data packet set instance in the downlink direction.

The data packet of the first data packet set may be one of the following: the 1st data packet of the first data packet set, any one data packet of the first data packet set, and one or more data packets in the first data packet set.

The second data packet set may be any one data packet set or any one data packet set instance in the uplink direction.

The data packet of the second data packet set may be one of the following: the 1st data packet of the second data packet set, any one data packet of the second data packet set, and one or more data packets in the second data packet set.

Optionally, the sending T32 to a core network device includes at least one of the following:
carrying T32 in a data packet (such as header information) of a transmitted second data packet set; and
sending control plane signaling (such as RRC signaling) to the fifth target end, where the control plane signaling carries T32;
   and/or
the sending T32 to the anchor gateway includes: carrying T32 in a data packet (such as header information) of a transmitted second data packet set;
   and/or
the sending T22 to the fifth target end includes at least one of the following:
   sending a fourth target data packet to the fifth target end, where the fourth target data packet (such as header information) carries T22; and
   sending control plane signaling (such as RRC signaling) to the fifth target end, where the control plane signaling carries T22;
      and/or
   the sending T22 to the anchor gateway includes: sending a fifth target data packet to the anchor gateway, where the fifth target data packet (such as header information) carries T22; where
   the fourth target data packet is one of the following: a forged data packet, an uplink real data packet, and a data packet in an uplink data packet set; and
   the fifth target data packet is one of the following: a forged data packet, an uplink real data packet, and a data packet in an uplink data packet set.

Optionally, the fourth target data packet further includes identification information of the first data packet set;
and/or
the fourth target data packet and/or the fifth target data packet further includes identification information of the first data packet set; where
the identification information includes at least one of the following: an identifier of a data packet set and a serial number of the data packet set.

Optionally, the performing, by a terminal, a fourth target operation includes:
obtaining, by the terminal, a data packet set delay monitoring requirement; and
performing, by the terminal, the fourth target operation according to the data packet set delay monitoring requirement.

Optionally, the data packet set delay monitoring requirement includes at least one of the following: a type of delay monitoring and a granularity of delay monitoring.

Optionally, the type of delay monitoring includes at least one of the following: a data packet set downlink delay, a data packet set uplink delay, and a data packet set round-trip delay.

Optionally, the data packet set downlink delay includes at least one of the following: a data packet set downlink delay between the radio access network device and an anchor gateway, a data packet set downlink delay between a terminal and the anchor gateway, and a data packet set downlink delay between the terminal and the radio access network device; where
the data packet set downlink delay between the radio access network device and the anchor gateway is used to indicate a time required for transmission of one data packet set from the anchor gateway to the radio access network device;
the data packet set downlink delay between the terminal and the anchor gateway is used to indicate a time required for transmission of one data packet set from the anchor gateway to the terminal; and
the data packet set downlink delay between the terminal and the radio access network device is used to indicate a time required for transmission of one data packet set from the radio access network device to the terminal.

Optionally, the data packet set uplink delay includes at least one of the following: a data packet set uplink delay between the radio access network device and an anchor gateway, a data packet set uplink delay between a terminal and the anchor gateway, and a data packet set uplink delay between the terminal and the radio access network device; where
the data packet set uplink delay between the radio access network device and the anchor gateway is used to indicate a time required for transmission of one data packet set from the radio access network device to the anchor gateway;
the data packet set uplink delay between the terminal and the anchor gateway is used to indicate a time required for transmission of one data packet set from the terminal to the anchor gateway; and
the data packet set uplink delay between the terminal and the radio access network device is used to indicate a time required for transmission of one data packet set from the terminal to the radio access network device.

Optionally, the data packet set round-trip delay includes at least one of the following: a data packet set round-trip delay between the radio access network device and an anchor gateway, a data packet set round-trip delay between a terminal and the anchor gateway, and a data packet set round-trip delay between the terminal and the radio access network device; where
the data packet set round-trip delay between the radio access network device and the anchor gateway is used to indicate: a time required for round-trip transmission of one data packet set between radio access network device and the anchor gateway;
the data packet set round-trip delay between the terminal and the anchor gateway is used to indicate: a time required for round-trip transmission of one data packet set between the terminal and the anchor gateway; and
the data packet set round-trip delay between the terminal and the radio access network device is used to indicate a time required for round-trip transmission of one data packet set between the terminal and the radio access network device.

Optionally, the granularity of delay monitoring includes at least one of the following: a terminal granularity, a flow granularity, a radio bearer granularity, and a data packet set granularity.

In this embodiment of this application, a related operation for monitoring a data packet set downlink delay, uplink delay, and/or round-trip delay by the terminal is defined, so as to cooperate with other communication devices and ensure normal transmission of a data packet set.

Refer to FIG. 6. An embodiment of this application provides a data packet set delay processing method, applied to a core network device. The core network device is, for example, an AMF, an SMF, a PCF, and an AF. The method includes the following steps.

Step 61: The core network device generates a data packet set delay monitoring requirement.

Step 62: The core network device sends the data packet set delay monitoring requirement.

In this embodiment of this application, a monitoring related operation performed by the core network device is defined, so as to cooperate with other communication devices and ensure normal transmission of a data packet set.

Optionally, the core network device sends the data packet set delay monitoring requirement to at least one of the following: a radio access network device, an anchor gateway, and a terminal.

Optionally, the data packet set delay monitoring requirement includes at least one of the following: a type of delay monitoring and a granularity of delay monitoring.

Optionally, the type of delay monitoring includes at least one of the following: a data packet set downlink delay, a data packet set uplink delay, and a data packet set round-trip delay.

Optionally, the data packet set downlink delay includes at least one of the following: a data packet set downlink delay between the radio access network device and an anchor gateway, a data packet set downlink delay between a terminal and the anchor gateway, and a data packet set downlink delay between the terminal and the radio access network device; where
the data packet set downlink delay between the radio access network device and the anchor gateway is used to indicate a time required for transmission of one data packet set from the anchor gateway to the radio access network device;
the data packet set downlink delay between the terminal and the anchor gateway is used to indicate a time required for transmission of one data packet set from the anchor gateway to the terminal; and
the data packet set downlink delay between the terminal and the radio access network device is used to indicate a time required for transmission of one data packet set from the radio access network device to the terminal.

Optionally, the data packet set uplink delay includes at least one of the following: a data packet set uplink delay between the radio access network device and an anchor gateway, a data packet set uplink delay between a terminal and the anchor gateway, and a data packet set uplink delay between the terminal and the radio access network device; where
the data packet set uplink delay between the radio access network device and the anchor gateway is used to indicate a time required for transmission of one data packet set from the radio access network device to the anchor gateway;
the data packet set uplink delay between the terminal and the anchor gateway is used to indicate a time required for transmission of one data packet set from the terminal to the anchor gateway; and
the data packet set uplink delay between the terminal and the radio access network device is used to indicate a time required for transmission of one data packet set from the terminal to the radio access network device.

Optionally, the data packet set round-trip delay includes at least one of the following: a data packet set round-trip delay between the radio access network device and an anchor gateway, a data packet set round-trip delay between a terminal and the anchor gateway, and a data packet set round-trip delay between the terminal and the radio access network device; where
the data packet set round-trip delay between the radio access network device and the anchor gateway is used to indicate: a time required for round-trip transmission of one data packet set between radio access network device and the anchor gateway;
the data packet set round-trip delay between the terminal and the anchor gateway is used to indicate: a time required for round-trip transmission of one data packet set between the terminal and the anchor gateway; and
the data packet set round-trip delay between the terminal and the radio access network device is used to indicate a time required for round-trip transmission of one data packet set between the terminal and the radio access network device.

Optionally, the granularity of delay monitoring includes at least one of the following: a terminal granularity, a flow granularity, a radio bearer granularity, and a data packet set granularity.

The following describes the data packet set delay processing method in the embodiments of this application with reference to specific application scenarios.

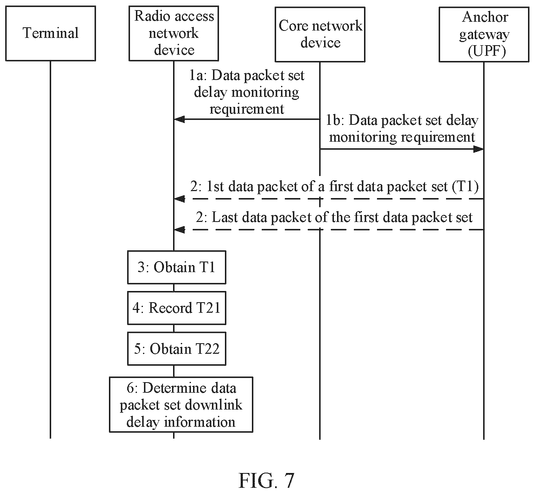

Application scenario 1 in the embodiments of this application mainly describes the process of calculating a data packet set downlink delay by the radio access network device. As shown in FIG. 7, the data packet set delay processing method in this embodiment of this application includes the following steps.

Steps 1a and 1b: A core network device (such as a core network control plane (Core Network Control Plane, CN CP)) sends a data packet set delay monitoring requirement to the radio access network device (RAN) and an anchor gateway (such as a core network user plane (Core Network User plane, CN UP), which may be a UPF in this embodiment). For specific content of the data packet set delay monitoring requirement, refer to description in the foregoing embodiments.

Step 2: The anchor gateway carries T1 in the 1st data packet of a first data packet set sent to the radio access network device, where T1 is one of the following: a time at which the anchor gateway sends the 1st data packet of the first data packet set, a time at which the anchor gateway receives the 1st data packet of the first data packet set from an N6 interface, and a time at which the 1st data packet of the first data packet set arrives at the anchor gateway.

Step 3: The radio access network device obtains T1 from the 1st data packet of the received first data packet set.

Step 4: The radio access network device records T21, where T21 is one of the following: a time at which the radio access network device receives the last data packet of the first data packet set and a time at which the last data packet of the first data packet set arrives at the radio access network device.

Step 5: The radio access network device obtains T22, where T22 is one of the following: a time at which the radio access network device sent the last data packet of the first data packet set to the terminal, a time at which the terminal successfully received the last data packet of the first data packet set, and a time at which the last data packet of the first data packet set arrived at the terminal.

Step 6: The radio access network device performs at least one of the following operations:
based on T21-T1, determining a data packet set downlink delay between the radio access network device and the anchor gateway;
based on T22-T1, determining a data packet set downlink delay between the terminal and the anchor gateway; and
based on T22-T21, determining a data packet set downlink delay between the terminal and the radio access network device.

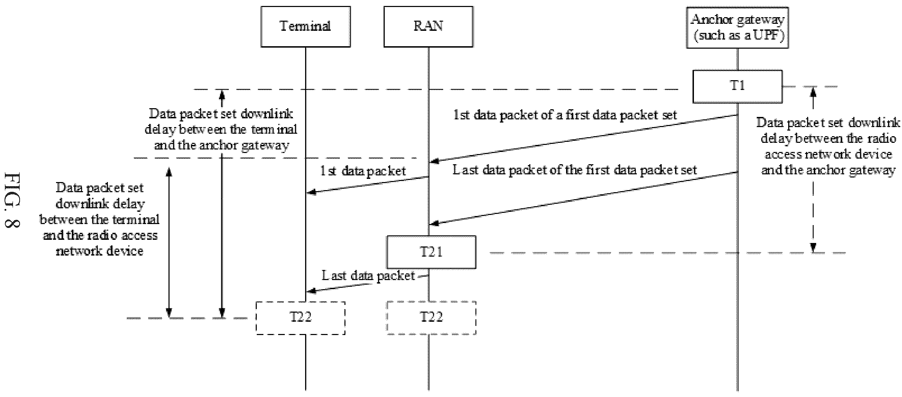

Refer to FIG. 8. FIG. 8 is a schematic diagram of time information related to data packet set downlink delays. As can be seen from FIG. 8, T1 is earlier than T21, and T21 is earlier than T22, where
T1 is one of the following: a time at which the anchor gateway sends the 1st data packet of the first data packet set, a time at which the anchor gateway receives the 1st data packet of the first data packet set from the N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device; and
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal.

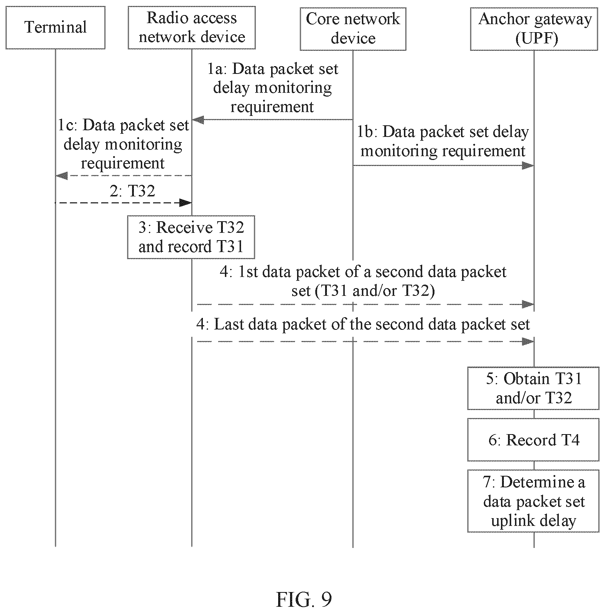

Application scenario 2 in the embodiments of this application mainly describes the process of calculating a data packet set uplink delay by the anchor gateway (which may be a UPF in this embodiment). As shown in FIG. 9, the data packet set delay processing method in this embodiment of this application includes the following steps.

Steps 1a and 1b: A core network device (such as a core network control plane (Core Network Control Plane, CN CP)) sends a data packet set delay monitoring requirement to a radio access network device (RAN) and an anchor gateway (such as a core network user plane, CN UP, which may be a UPF in this embodiment). For specific content of the data packet set delay monitoring requirement, refer to description in the foregoing embodiments.

Step 1c: The radio access network device sends the data packet set delay monitoring requirement to the terminal (UE).

Step 2: The terminal sends T32 to the radio access network device, where T32 is one of the following: a time at which the terminal starts to wait for the radio access network device to schedule the 1st data packet of a second data packet set, a time at which the 1st data packet of the second data packet set arrives at the terminal (such as an NAS or AS), and a time at which the terminal sends the 1st data packet of the second data packet set to the radio access network device.

Step 3: The radio access network device obtains T32 and records T31, where T31 is a time at which the radio access network device sends the 1st data packet of the second data packet set to the anchor gateway.

Step 4: The radio access network device carries T31 and/or T32 in the 1st data packet of the second data packet set sent to the anchor gateway.

Step 5: The anchor gateway obtains T31 and/or T32 from the 1st data packet of the received second data packet set.

Step 6: The anchor gateway records T4, where T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

Step 7: The anchor gateway performs at least one of the following operations:
based on T4-T31, determining a data packet set uplink delay between the radio access network device and the anchor gateway;
based on T4-T32, determining a data packet set uplink delay T4-T32 between the terminal and the anchor gateway; and
based on T31-T32, determining a data packet set uplink delay between the terminal and the radio access network device.

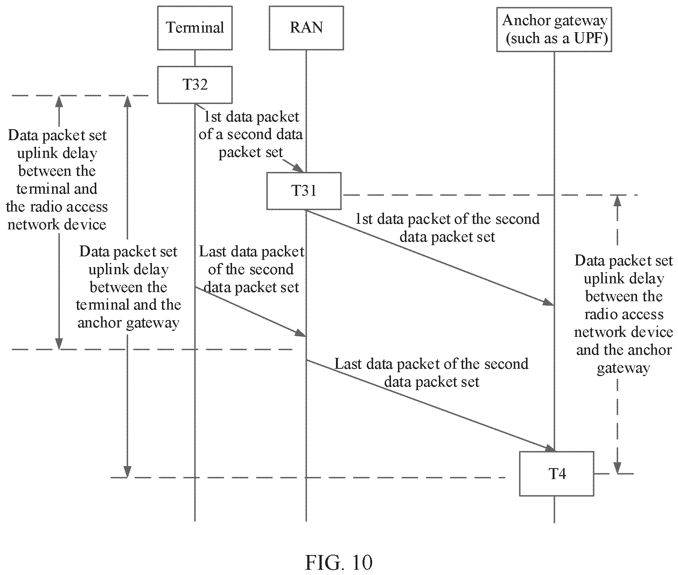

Refer to FIG. 10. FIG. 10 is a schematic diagram of time information related to data packet set uplink delays. As can be seen from FIG. 10, T32 is earlier than T31, and T31 is earlier than T4, where
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

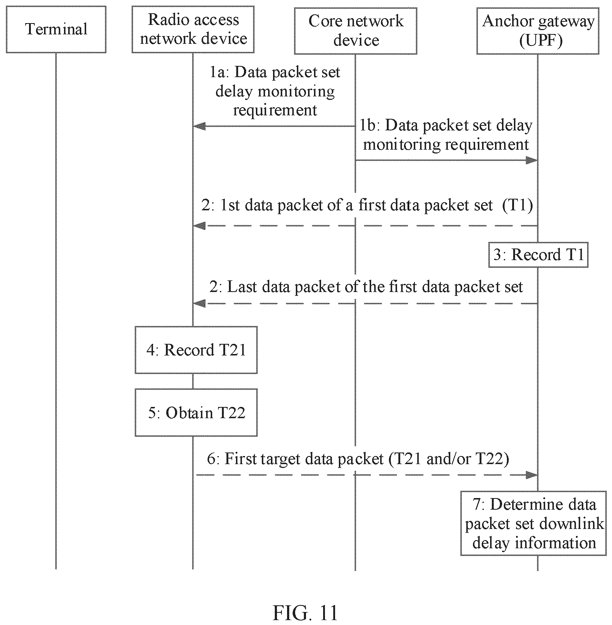

Application scenario 3 in the embodiments of this application mainly describes the process of calculating a data packet set downlink delay by the anchor gateway (which may be a UPF in this embodiment). As shown in FIG. 11, the data packet set delay processing method in this embodiment of this application includes the following steps.

Steps 1a and 1b: A core network device (such as a core network control plane (Core Network Control Plane, CN CP)) sends a data packet set delay monitoring requirement to a radio access network device (RAN) and an anchor gateway (such as a core network user plane, CN UP, which may be a UPF in this embodiment). For specific content of the data packet set delay monitoring requirement, refer to description in the foregoing embodiments.

Step 2: The anchor gateway sends a first data packet set to the radio access network device.

Step 3: The anchor gateway records T1, where T1 is one of the following: a time at which the anchor gateway sends the 1st data packet of the first data packet set, a time at which the anchor gateway receives the 1st data packet of the first data packet set from an N6 interface, and a time at which the 1st data packet of the first data packet set arrives at the anchor gateway.

Step 4: The radio access network device records T21, where T21 is one of the following: a time at which the radio access network device receives the last data packet of the first data packet set and a time at which the last data packet of the first data packet set arrives at the radio access network device.

Step 5: The radio access network device obtains T22, where T22 is one of the following: a time at which the radio access network device sent the last data packet of the first data packet set to the terminal, a time at which the terminal successfully received the last data packet of the first data packet set, and a time at which the last data packet of the first data packet set arrived at the terminal.

Step 6: The radio access network device sends a first target data packet to the anchor gateway, where the first target data packet carries T21 and/or T22, and the first target data packet further carries identification information of the first data packet set.

Step 7: The anchor gateway performs at least one of the following operations based on the received T21 and/or T22:
based on T21-T1, determining a data packet set downlink delay T21-T1 between the radio access network device and the anchor gateway;
based on T22-T1, determining a data packet set downlink delay between the terminal and the anchor gateway; and
based on T22-T21, determining a data packet set downlink delay between the terminal and the radio access network device.

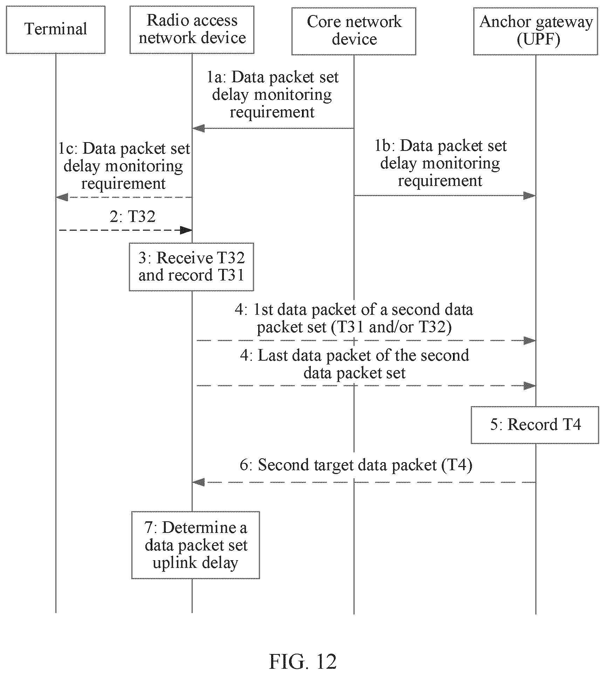

Application scenario 4 in the embodiments of this application mainly describes the process of calculating a data packet set uplink delay by the radio access network device. As shown in FIG. 12, the data packet set delay processing method in this embodiment of this application includes the following steps.

Steps 1a and 1b: A core network device (such as a core network control plane (Core Network Control Plane, CN CP)) sends a data packet set delay monitoring requirement to a radio access network device (RAN) and an anchor gateway (such as a core network user plane, CN UP, which may be a UPF in this embodiment). For specific content of the data packet set delay monitoring requirement, refer to description in the foregoing embodiments.

Step 1c: The radio access network device sends the data packet set delay monitoring requirement to the terminal (UE).

Step 2: The terminal sends T32 to the radio access network device, where T32 is one of the following: a time at which the terminal starts to wait for the radio access network device to schedule the 1st data packet of a second data packet set, a time at which the 1st data packet of the second data packet set arrives at the terminal (such as an NAS or AS), and a time at which the terminal sends the 1st data packet of the second data packet set to the radio access network device.

Step 3: The radio access network device obtains T32 and records T31, where T31 is a time at which the radio access network device sends the 1st data packet of the second data packet set to the UPF.

Step 4: The radio access network device sends the second data packet set to the anchor gateway.

Step 5: The anchor gateway records T4, where T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

Step 6: The anchor gateway sends a second target data packet to the radio access network device, where the second target data packet carries T4, and T4 is one of the following: a time at which the anchor gateway receives the last data packet or a plurality of data packets at the tail of the second data packet set, a time at which the anchor gateway sends the last data packet or a plurality of data packets at the tail of the second data packet set to the N6 interface, and a time at which the last data packet or a plurality of data packets at the tail of the second data packet set arrive at the anchor gateway.

Step 7: The radio access network device performs at least one of the following operations:
based on T4-T31, determining a data packet set uplink delay between the radio access network device and the anchor gateway;
based on T4-T32, determining a data packet set uplink delay between the terminal and the anchor gateway; and
based on T31-T32, determining a data packet set uplink delay between the terminal and the radio access network device.

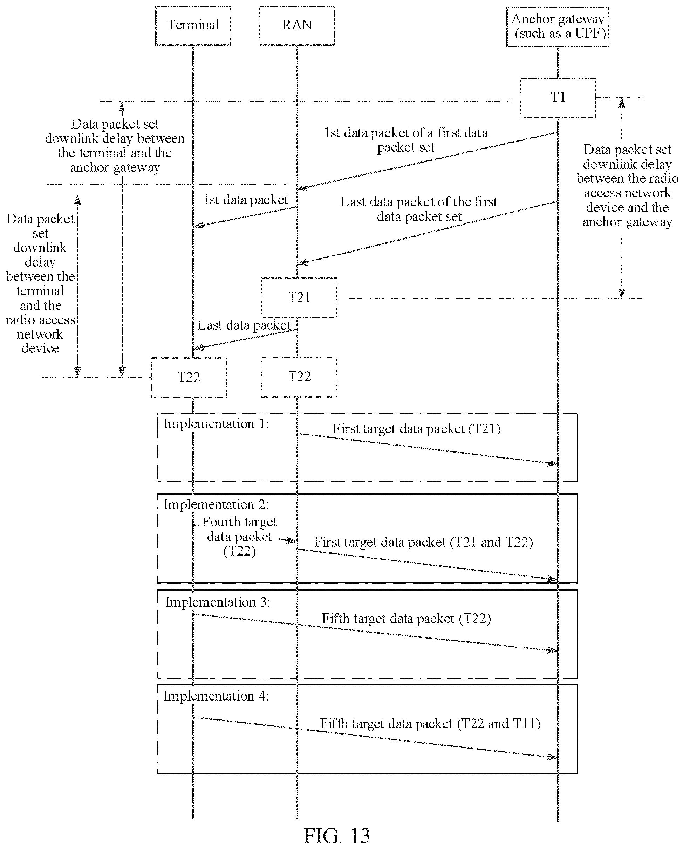

Application scenario 4 of the embodiments of this application mainly describes forged data packets generated in the process of calculating a delay of the first data packet set involved in the foregoing embodiments. Refer to FIG. 13. As can be seen from FIG. 13, in implementation 1, a radio access network device may send a first target data packet to an anchor gateway (such as a UPF), where the first target data packet carries T21. In implementation 2, the radio access network device may send a first target data packet to the anchor gateway (such as a UPF), where the first target data packet carries T21 and T22, T22 is sent by a terminal to the radio access network device, and the terminal adds T22 to a fourth target data packet. In implementation 3, the terminal may send a fifth target data packet to the anchor gateway, where the fifth target data packet carries T22. In implementation 4, alternatively, the terminal sends a fifth target data packet to the anchor gateway, and the fifth target data packet carries T21 and T22. In this case, the terminal needs to obtain T21 from the radio access network device first, and T21 may be carried in a data packet of a first data packet set sent to the terminal by the radio access network device.

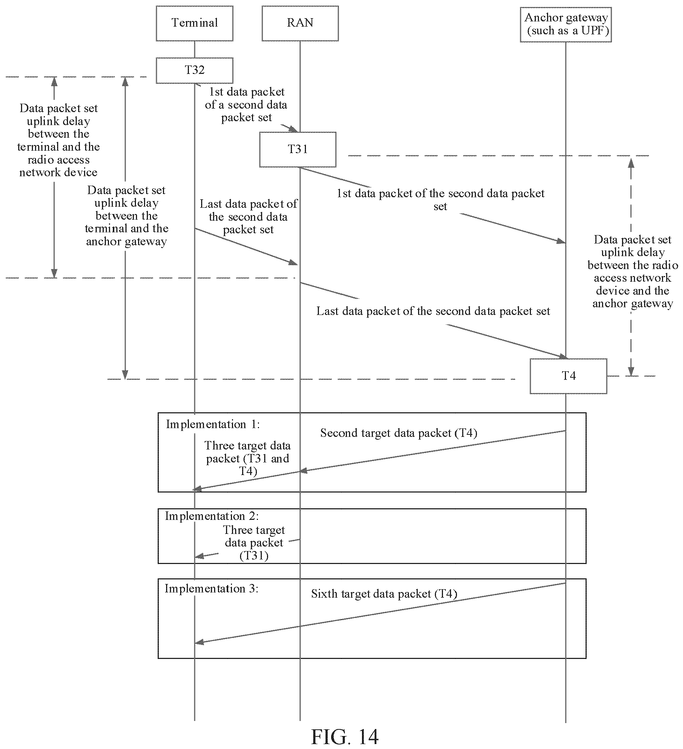

Application scenario 5 of the embodiments of this application mainly describes forged data packets generated in the process of calculating a delay of a second data packet set involved in the foregoing embodiments. Refer to FIG. 14. As can be seen from FIG. 14, in implementation 1, an anchor gateway (such as a UPF) may send a second target data packet to a radio access network device, and the second target data packet carries T4. The radio access network device may send a third target data packet to the terminal, and the third target data packet carries T31 and T4. In implementation 2, the radio access network device may send a third target data packet to the terminal, and the third target data packet carries T31. In implementation 3, the anchor gateway may further send a sixth target data packet to the terminal, and the sixth target data packet carries T4.

For the data packet set delay processing method provided in the embodiments of this application, the execution body may be a data packet set delay processing apparatus. In this embodiment of this application, the data packet set delay processing apparatus provided in the embodiments of this application is described by using the data packet set delay processing method being executed by the data packet set delay processing apparatus as an example.

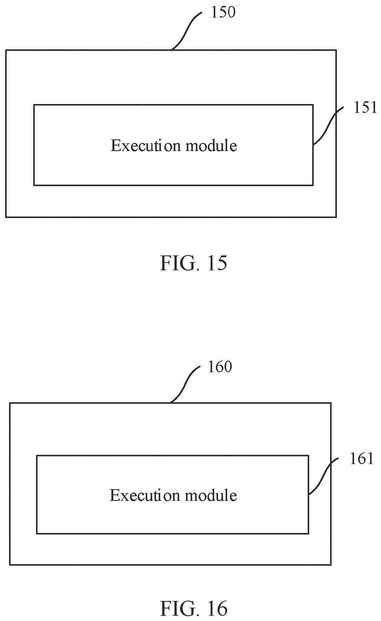

Refer to FIG. 15. An embodiment of this application further provides a data packet set delay processing apparatus 150, including:
an execution module 151, configured to perform a first target operation, where the first target operation includes at least one of the following operations:
a first operation corresponding to a data packet set downlink delay;
a second operation corresponding to the data packet set downlink delay;
a first operation corresponding to a data packet set uplink delay;
a second operation corresponding to the data packet set uplink delay;
a first operation corresponding to a data packet set delay; and
a second operation corresponding to the data packet set delay.

In this embodiment of this application, a related operation for monitoring a data packet set downlink delay, uplink delay, and/or round-trip delay is defined, so as to ensure normal transmission of a data packet set.

Optionally, the first operation corresponding to the data packet set downlink delay includes at least one of the following:
obtaining T1;
recording T21;
obtaining T22;
based on T21-T1, determining a data packet set downlink delay (for example, a value is T21-T1) between the radio access network device and an anchor gateway;
based on T22-T1, determining a data packet set downlink delay (for example, a value is T22-T1) between a terminal and the anchor gateway;
based on T22-T21, determining a data packet set downlink delay (for example, a value is T22-T21) between the terminal and the radio access network device; and
sending determined delay information, where the delay information includes at least one of the following: a data packet set downlink delay between the radio access network device and the anchor gateway, a data packet set downlink delay between the terminal and the anchor gateway, and a data packet set downlink delay between the terminal and the radio access network device; where
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal.

Optionally, the second operation corresponding to the data packet set downlink delay includes at least one of the following:
obtaining T1;
recording T21;
obtaining T22;
sending T21 and/or T22 to a first target end;
sending T21 and/or T1 to a second target end;
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
the first target end is one of the following: an N3 interface and an anchor gateway; and
the second target end is one of the following: a Uu interface and a terminal.

Optionally, the first operation corresponding to the data packet set uplink delay includes at least one of the following:
obtaining T4;
recording T31;
obtaining T32;
based on T4-T31, determining a data packet set uplink delay (for example, a value is T4-T31) between the radio access network device and an anchor gateway;
based on T4-T32, determining a data packet set uplink delay (for example, a value is T4-T32) between a terminal and the anchor gateway;
based on T31-T32, determining a data packet set uplink delay (for example, a value is T31-T32) between the terminal and the radio access network device; and
sending determined delay information, where the delay information includes at least one of the following: a data packet set uplink delay between the radio access network device and the anchor gateway, a data packet set uplink delay between the terminal and the anchor gateway, and a data packet set uplink delay between the terminal and the radio access network device; where
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

Optionally, the second operation corresponding to the data packet set uplink delay includes at least one of the following:
recording T31;
obtaining T32;
obtaining T4;
sending T31 and/or T32 to the first target end; and
sending T31 and/or T4 to the second target end; where
the first target end is one of the following: an N3 interface and an anchor gateway;
the second target end is one of the following: a Uu interface and a terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

Optionally, the first operation corresponding to the data packet set delay includes at least one of the following:
obtaining T1;
recording T21;
obtaining T22;
obtaining T4;
recording T31;
obtaining T32;
based on (T21-T1+T4-T31)/2, determining a data packet set uplink delay and/or downlink delay (for example, a value is (T21-T1+T4-T31)/2) between the radio access network device and an anchor gateway;
based on (T22-T1+T4-T32)/2, determining a data packet set uplink delay and/or downlink delay (for example, a value is (T22-T1+T4-T32)/2) between a terminal and the anchor gateway;
based on (T22-T21+T32-T31)/2, determining a data packet set uplink delay and/or downlink delay (for example, a value is (T22-T21+T32-T31)/2) between the terminal and the radio access network device;
based on (T21-T1+T4-T31), determining a data packet set round-trip delay (for example, a value is (T21-T1+T4-T31)) between the radio access network device and the anchor gateway;
based on (T22-T1+T4-T32), determining a data packet set round-trip delay (for example, a value is (T22-T1+T4-T32)) between the terminal and the anchor gateway;
based on (T22-T21+T32-T31), determining a data packet set round-trip delay (for example, a value is (T22-T21+T32-T31)) between the terminal and the radio access network device; and
sending determined delay information, where the delay information includes at least one of the following: a data packet set round-trip delay between the radio access network device and the anchor gateway, a data packet set round-trip delay between the terminal and the anchor gateway, and a data packet set round-trip delay between the terminal and radio access network device; where
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

Optionally, the second operation corresponding to the data packet set delay includes at least one of the following:
obtaining T1;
recording T21;
obtaining T22;
recording T31;
obtaining T32;
obtaining T4;
sending T21 and/or T22 to a first target end;
sending T21 and/or T1 to a second target end;
sending T31 and/or T32 to the first target end; and
sending T31 and/or T4 to the second target end; where
the first target end is one of the following: an N3 interface and an anchor gateway;
the second target end is one of the following: a Uu interface and a terminal;
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

Optionally, the sending T21 and/or T22 to a first target end includes: sending a first target data packet to the first target end, where the first target data packet (such as header information) carries T21 and/or T22;
and/or
the sending T21 and/or T1 to a second target end includes: carrying T21 and/or T1 in a data packet (such as header information) of the first data packet set sent to the second target end; where
the first target data packet is one of the following: a forged data packet, an uplink real data packet, and a data packet in an uplink data packet set.

Optionally, the sending T31 and/or T32 to the first target end includes: carrying T31 and/or T32 in a data packet (such as header information) of the second data packet set sent to the first target end;
and/or
the sending T31 and/or T4 to the second target end includes: sending a third target data packet to the second target end, where the third target data packet (such as header information) carries T31 and/or T4; where
the third target data packet is one of the following: a forged data packet, a downlink real data packet, and a data packet in a downlink data packet set.

Optionally, the obtaining T32 includes one of the following: obtaining T32 from a data packet (such as header information) of a received second data packet set, and receiving control plane signaling (such as RRC signaling), where the control plane signaling carries T32;
and/or
the obtaining T4 includes: obtaining T4 from a received second target data packet (such as header information); where
the second target data packet is one of the following: a forged data packet, a downlink real data packet, and a data packet in a downlink data packet set.

Optionally, the obtaining T1 includes: obtaining T1 from a data packet (such as header information) of a received first data packet set;
and/or
the obtaining T22 includes at least one of the following:
determining a time for sending or successfully sending the last data packet of the first data packet set as T22;
determining a time for receiving an ACK of the last data packet of the first data packet set from the terminal as T22;
receiving a fourth target data packet, where the fourth target data packet (such as header information) carries T22; and
receiving T22 from a control plane between the terminal and the radio access network device; where
the fourth target data packet is one of the following: a forged data packet, an uplink real data packet, and a data packet in an uplink data packet set.

Optionally,
the first target data packet further includes identification information of the first data packet set; where
the identification information includes at least one of the following: an identifier of a data packet set and a serial number of the data packet set;
   and/or
the second target data packet further includes identification information of the second data packet set; where
the identification information includes at least one of the following: an identifier of a data packet set and a serial number of the data packet set;
   and/or
the third target data packet further includes identification information of the second data packet set; where
the identification information includes at least one of the following: an identifier of a data packet set and a serial number of the data packet set;
   and/or
the fourth target data packet further includes identification information of the second data packet set; where
the identification information includes at least one of the following: an identifier of a data packet set and a serial number of the data packet set.

Optionally, the execution module 151 is configured to obtain a data packet set delay monitoring requirement, and perform the first target operation according to data packet set delay monitoring requirement.

Optionally, the data packet set delay monitoring requirement includes at least one of the following: a type of delay monitoring and a granularity of delay monitoring.

Optionally, the type of delay monitoring includes at least one of the following: a data packet set downlink delay, a data packet set uplink delay, and a data packet set round-trip delay.

Optionally, the data packet set downlink delay includes at least one of the following: a data packet set downlink delay between the radio access network device and an anchor gateway, a data packet set downlink delay between a terminal and the anchor gateway, and a data packet set downlink delay between the terminal and the radio access network device; where
the data packet set downlink delay between the radio access network device and the anchor gateway is used to indicate a time required for transmission of one data packet set from the anchor gateway to the radio access network device;
the data packet set downlink delay between the terminal and the anchor gateway is used to indicate a time required for transmission of one data packet set from the anchor gateway to the terminal; and
the data packet set downlink delay between the terminal and the radio access network device is used to indicate a time required for transmission of one data packet set from the radio access network device to the terminal.

Optionally, the data packet set uplink delay includes at least one of the following: a data packet set uplink delay between the radio access network device and an anchor gateway, a data packet set uplink delay between a terminal and the anchor gateway, and a data packet set uplink delay between the terminal and the radio access network device; where
the data packet set uplink delay between the radio access network device and the anchor gateway is used to indicate a time required for transmission of one data packet set from the radio access network device to the anchor gateway;
the data packet set uplink delay between the terminal and the anchor gateway is used to indicate a time required for transmission of one data packet set from the terminal to the anchor gateway; and
the data packet set uplink delay between the terminal and the radio access network device is used to indicate a time required for transmission of one data packet set from the terminal to the radio access network device.

Optionally, the data packet set round-trip delay includes at least one of the following: a data packet set round-trip delay between the radio access network device and an anchor gateway, a data packet set round-trip delay between a terminal and the anchor gateway, and a data packet set round-trip delay between the terminal and the radio access network device; where
the data packet set round-trip delay between the radio access network device and the anchor gateway is used to indicate: a time required for round-trip transmission of one data packet set between radio access network device and the anchor gateway;
the data packet set round-trip delay between the terminal and the anchor gateway is used to indicate: a time required for round-trip transmission of one data packet set between the terminal and the anchor gateway; and
the data packet set round-trip delay between the terminal and the radio access network device is used to indicate a time required for round-trip transmission of one data packet set between the terminal and the radio access network device.

Optionally, the granularity of delay monitoring includes at least one of the following: a terminal granularity, a flow granularity, a radio bearer granularity, and a data packet set granularity.

The data packet set delay processing apparatus in this embodiment of the application may be an electronic device, such as an electronic device with an operating system, or a component in the electronic device, such as an integrated circuit or a chip.

The data packet set delay processing apparatus provided in this embodiment of this application can implement the processes implemented in the method embodiment in FIG. 2, with the same technical effects achieved. To avoid repetition, details are not described herein again.

Refer to FIG. 16. An embodiment of this application further provides a data packet set delay processing apparatus 160, including:
an execution module 161, configured to perform a second target operation, where the second target operation includes at least one of the following:
a third operation corresponding to a data packet set downlink delay;
a fourth operation corresponding to the data packet set downlink delay;
a third operation corresponding to a data packet set uplink delay;
a fourth operation corresponding to the data packet set uplink delay;
a third operation corresponding to a data packet set delay; and
a fourth operation corresponding to the data packet set delay.

In this embodiment of this application, a related operation for monitoring a data packet set downlink delay, uplink delay, and/or round-trip delay is defined, so as to ensure normal transmission of a data packet set.

Optionally, the third operation corresponding to the data packet set downlink delay includes at least one of the following:
recording T1;
obtaining T21 and/or T22;
based on T21-T1, determining a data packet set downlink delay (for example, a value is T21-T1) between the radio access network device and an anchor gateway;
based on T22-T1, determining a data packet set downlink delay (for example, a value is T22-T1) between a terminal and the anchor gateway;
based on T22-T21, determining a data packet set downlink delay (for example, a value is T22-T21) between the terminal and the radio access network device;
sending determined delay information, where the delay information includes at least one of the following: a data packet set downlink delay between the radio access network device and the anchor gateway, a data packet set downlink delay between the terminal and the anchor gateway, and a data packet set downlink delay between the terminal and the radio access network device;
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device; and
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal.

Optionally, the fourth operation corresponding to the data packet set downlink delay includes at least one of the following:
recording T1;
sending T1 to a third target end; and
sending T1 to a fourth target end.
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
the third target end is one of the following: an N3 interface, an N9 interface, and a radio access network device; and
the fourth target end is one of the following: a terminal.

Optionally, the third operation corresponding to the data packet set uplink delay includes at least one of the following:
recording T4;
obtaining T31 and/or T32;
based on T4-T31, determining a data packet set uplink delay (for example, a value is T4-T31) between a radio access network device and the anchor gateway;
based on T4-T32, determining a data packet set uplink delay (for example, a value is T4-T32) between a terminal and the anchor gateway;
based on T31-T32, determining a data packet set uplink delay (for example, a value is T31-T32) between the terminal and the radio access network device; and
sending determined delay information, where the delay information includes at least one of the following: a data packet set uplink delay between the radio access network device and the anchor gateway, a data packet set uplink delay between the terminal and the anchor gateway, and a data packet set uplink delay between the terminal and the radio access network device; where
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

Optionally, the fourth operation corresponding to the data packet set uplink delay includes at least one of the following:
recording T4;
sending T4 to the third target end; and
sending T4 to the fourth target end; where
the third target end is one of the following: an N3 interface, an N9 interface, and a radio access network device; and
the fourth target end is one of the following: a terminal; where
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

Optionally, the third operation corresponding to the data packet set delay includes at least one of the following:
recording T1;
obtaining T21 and/or T22;
recording T4;
obtaining T31 and/or T32;
based on (T21-T1+T4-T31)/2, determining a data packet set uplink delay and/or downlink delay (for example, a value is (T21-T1+T4-T31)/2) between the radio access network device and an anchor gateway;
based on (T22-T1+T4-T32)/2, determining a data packet set uplink delay and/or downlink delay (for example, a value is (T22-T1+T4-T32)/2) between a terminal and the anchor gateway;
based on (T22-T21+T32-T31)/2, determining a data packet set uplink delay and/or downlink delay (for example, a value is (T22-T21+T32-T31)/2) between the terminal and the radio access network device;
based on (T21-T1+T4-T31), determining a data packet set round-trip delay (for example, a value is (T21-T1+T4-T31)) between the radio access network device and the anchor gateway;
based on (T22-T1+T4-T32), determining a data packet set round-trip delay (for example, a value is (T22-T1+T4-T32)) between the terminal and the anchor gateway;
based on (T22-T21+T32-T31), determining a data packet set round-trip delay (for example, a value is (T22-T21+T32-T31)) between the terminal and the radio access network device; and
sending determined delay information, where the delay information includes at least one of the following: a data packet set round-trip delay between the radio access network device and the anchor gateway, a data packet set round-trip delay between the terminal and the anchor gateway, and a data packet set round-trip delay between the terminal and radio access network device; where
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

Optionally, the obtaining T21 and/or T22 includes at least one of the following:
obtaining T21 and/or T22 from a received first target data packet (such as header information); and
obtaining T21 and/or T22 from a received fifth target data packet (such as header information).

The first target data packet is one of the following: a forged data packet, an uplink real data packet, and a data packet in an uplink data packet set; and
the fifth target data packet is one of the following: a forged data packet, an uplink real data packet, and a data packet in an uplink data packet set.

Optionally, the obtaining T31 and/or T32 includes:
obtaining T31 and/or T32 from a data packet of a received second data packet set.

Optionally, the fourth operation corresponding to the data packet set delay includes at least one of the following:
recording T1;
sending T1 to a third target end;
sending T1 to a fourth target end;
recording T4;
sending T4 to the third target end; and
sending T4 to the fourth target end; where
the third target end is one of the following: an N3 interface, an N9 interface, and a radio access network device; and
the fourth target end is one of the following: a terminal; where
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

Optionally, the sending T1 to a third target end includes: carrying T1 in a data packet (such as header information) of the first data packet set sent to the third target end;
and/or
the sending T1 to a fourth target end includes: carrying T1 in a data packet (such as header information) of the first data packet set sent to the fourth target end.

Optionally, the sending T4 to the third target end includes: sending a second target data packet to the third target end, where the second target data packet carries T4;
and/or
the sending T4 to the fourth target end includes: sending a sixth target data packet to the fourth target end, where the sixth target data packet carries T4; where
the second target data packet is one of the following: a forged data packet, a downlink real data packet, and a data packet in a downlink data packet set.

Optionally, the first target data packet further includes identification information of the first data packet set; where
the identification information includes at least one of the following: an identifier of a data packet set and a serial number of the data packet set;
   and/or
the fifth target data packet further includes identification information of the first data packet set; where
the identification information includes at least one of the following: an identifier of a data packet set and a serial number of the data packet set;
   and/or
the second target data packet further includes identification information of the second data packet set; where
the identification information includes at least one of the following: an identifier of a data packet set and a serial number of the data packet set;
   and/or
the sixth target data packet further includes identification information of the second data packet set; where
the identification information includes at least one of the following: an identifier of a data packet set and a serial number of the data packet set.

Optionally, the execution module 161 is configured to obtain a data packet set delay monitoring requirement, and perform the second target operation according to data packet set delay monitoring requirement.

Optionally, the data packet set delay monitoring requirement includes at least one of the following: a type of delay monitoring and a granularity of delay monitoring.

Optionally, the type of delay monitoring includes at least one of the following: a data packet set downlink delay, a data packet set uplink delay, and a data packet set round-trip delay.

Optionally, the data packet set downlink delay includes at least one of the following: a data packet set downlink delay between the radio access network device and an anchor gateway, a data packet set downlink delay between a terminal and the anchor gateway, and a data packet set downlink delay between the terminal and the radio access network device; where
the data packet set downlink delay between the radio access network device and the anchor gateway is used to indicate a time required for transmission of one data packet set from the anchor gateway to the radio access network device;
the data packet set downlink delay between the terminal and the anchor gateway is used to indicate a time required for transmission of one data packet set from the anchor gateway to the terminal; and
the data packet set downlink delay between the terminal and the radio access network device is used to indicate a time required for transmission of one data packet set from the radio access network device to the terminal.

Optionally, the data packet set uplink delay includes at least one of the following: a data packet set uplink delay between the radio access network device and an anchor gateway, a data packet set uplink delay between a terminal and the anchor gateway, and a data packet set uplink delay between the terminal and the radio access network device; where
the data packet set uplink delay between the radio access network device and the anchor gateway is used to indicate a time required for transmission of one data packet set from the radio access network device to the anchor gateway;
the data packet set uplink delay between the terminal and the anchor gateway is used to indicate a time required for transmission of one data packet set from the terminal to the anchor gateway; and
the data packet set uplink delay between the terminal and the radio access network device is used to indicate a time required for transmission of one data packet set from the terminal to the radio access network device.

Optionally, the data packet set round-trip delay includes at least one of the following: a data packet set round-trip delay between the radio access network device and an anchor gateway, a data packet set round-trip delay between a terminal and the anchor gateway, and a data packet set round-trip delay between the terminal and the radio access network device; where
the data packet set round-trip delay between the radio access network device and the anchor gateway is used to indicate: a time required for round-trip transmission of one data packet set between radio access network device and the anchor gateway;
the data packet set round-trip delay between the terminal and the anchor gateway is used to indicate: a time required for round-trip transmission of one data packet set between the terminal and the anchor gateway; and
the data packet set round-trip delay between the terminal and the radio access network device is used to indicate a time required for round-trip transmission of one data packet set between the terminal and the radio access network device.

Optionally, the granularity of delay monitoring includes at least one of the following: a terminal granularity, a flow granularity, a radio bearer granularity, and a data packet set granularity.

The data packet set delay processing apparatus in this embodiment of the application may be an electronic device, such as an electronic device with an operating system, or a component in the electronic device, such as an integrated circuit or a chip.

The data packet set delay processing apparatus provided in this embodiment of this application can implement the processes implemented in the method embodiment in FIG. 3, with the same technical effects achieved. To avoid repetition, details are not described herein again.

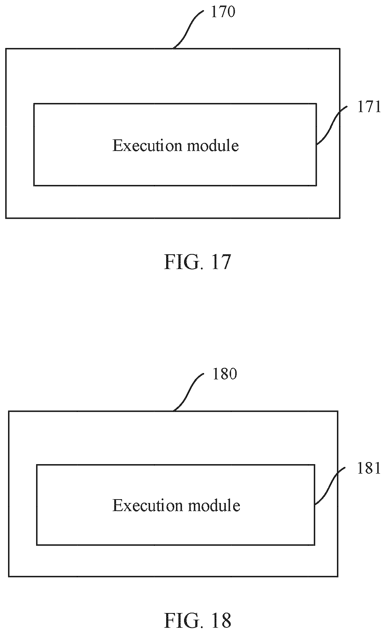

Refer to FIG. 17. An embodiment of this application further provides a data packet set delay processing apparatus 170, including:
an execution module 171, configured to perform a third target operation, where the third target operation includes at least one of the following operations:
a fifth operation corresponding to a data packet set downlink delay;
a sixth operation corresponding to the data packet set downlink delay;
a fifth operation corresponding to a data packet set uplink delay;
a sixth operation corresponding to the data packet set uplink delay;
a fifth operation corresponding to a data packet set delay; and
a sixth operation corresponding to the data packet set delay.

In this embodiment of this application, a related operation for monitoring a data packet set downlink delay, uplink delay, and/or round-trip delay is defined, so as to ensure normal transmission of a data packet set.

Optionally, the fifth operation corresponding to the data packet set downlink delay includes at least one of the following:
obtaining T1 and/or T21;
recording T22;
based on T21-T1, determining a data packet set downlink delay (for example, a value is T21-T1) between a radio access network device and an anchor gateway;
based on T22-T1, determining a data packet set downlink delay (for example, a value is T22-T1) between the terminal and the anchor gateway;
based on T22-T21, determining a data packet set downlink delay (for example, a value is T22-T21) between the terminal and the radio access network device; and
sending determined delay information, where the delay information includes at least one of the following: a data packet set downlink delay between the radio access network device and the anchor gateway, a data packet set downlink delay between the terminal and the anchor gateway, and a data packet set downlink delay between the terminal and the radio access network device; where
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device; and
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal.

Optionally, the sixth operation corresponding to the data packet set downlink delay includes at least one of the following:
recording T22;
obtaining T21;
sending T22 to a fifth target end; and
sending T22 and/or T21 to an anchor gateway; where
T21 is one of the following: a time at which the radio access network device receives the last data packet of a first data packet set, and a time at which the last data packet of the first data packet set arrives at the radio access network device;
   and/or
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
the fifth target end includes one of the following: a radio access network device and a Uu interface.

Optionally, the fifth operation corresponding to the data packet set uplink delay includes at least one of the following:
obtaining T4;
obtaining T31;
recording T32;
based on T4-T31, determining a data packet set uplink delay (for example, a value is T4-T31) between a radio access network device and the anchor gateway;
based on T4-T32, determining a data packet set uplink delay (for example, a value is T4-T32) between a terminal and the anchor gateway;
based on T31-T32, determining a data packet set uplink delay (for example, a value is T31-T32) between the terminal and the radio access network device; and
sending determined delay information, where the delay information includes at least one of the following: a data packet set uplink delay between the radio access network device and the anchor gateway, a data packet set uplink delay between the terminal and the anchor gateway, and a data packet set uplink delay between the terminal and the radio access network device; where
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where the first target end is one of the following: an N3 interface and an anchor gateway.

Optionally, the sixth operation corresponding to the data packet set uplink delay includes at least one of the following:
recording T32; and
sending T32; where
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device.

Optionally, the fifth operation corresponding to the data packet set delay includes at least one of the following:
obtaining T1 and/or T21;
recording T22;
obtaining T4;
recording T32;
obtaining T31;
based on (T21-T1+T4-T31)/2, determining a data packet set uplink delay and/or downlink delay (for example, a value is (T21-T1+T4-T31)/2) between the radio access network device and an anchor gateway;
based on (T22-T1+T4-T32)/2, determining a data packet set uplink delay and/or downlink delay (for example, a value is (T22-T1+T4-T32)/2) between a terminal and the anchor gateway;
based on (T22-T21+T32-T31)/2, determining a data packet set uplink delay and/or downlink delay (for example, a value is (T22-T21+T32-T31)/2) between the terminal and the radio access network device;
based on (T21-T1+T4-T31), determining a data packet set round-trip delay (for example, a value is (T21-T1+T4-T31)) between the radio access network device and the anchor gateway;
based on (T22-T1+T4-T32), determining a data packet set round-trip delay (for example, a value is (T22-T1+T4-T32)/2) between the terminal and the anchor gateway;
based on (T22-T21+T32-T31), determining a data packet set round-trip delay (for example, a value is (T22-T21+T32-T31)) between the terminal and the radio access network device; and
sending determined delay information, where the delay information includes at least one of the following: a data packet set round-trip delay between the radio access network device and the anchor gateway, a data packet set round-trip delay between the terminal and the anchor gateway, and a data packet set round-trip delay between the terminal and radio access network device; where
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

Optionally, the obtaining T1 and/or T21 includes:
obtaining T1 and/or T21 from a data packet of a received first data packet set.

Optionally, the obtaining T4 includes: obtaining T4 from the received third target data packet and/or sixth target data packet; where
the third target data packet is one of the following: a forged data packet, a downlink real data packet, and a data packet in a downlink data packet set; where
the sixth target data packet is one of the following: a forged data packet, a downlink real data packet, and a data packet in a downlink data packet set;
   and/or
the obtaining T31 includes obtaining T31 from the received third target data packet; and
the third target data packet is one of the following: a forged data packet, a downlink real data packet, and a data packet in a downlink data packet set.

Optionally, the sixth operation corresponding to the data packet set delay includes at least one of the following:
recording T32;
sending T32;
recording T22;
obtaining T21;
sending T22 to a fifth target end; and
sending T22 and/or T21 to an anchor gateway; where
T22 is one of the following: a time at which the radio access network device sends the last data packet of a first data packet set to the terminal, a time at which the terminal receives or successfully receives the last data packet of the first data packet set, and a time at which the last data packet of the first data packet set arrives at the terminal;
T32 ...; and
the fifth target end includes one of the following: a radio access network device and a Uu interface.

Optionally, the obtaining T21 includes: obtaining T21 from a data packet of a received first data packet set;
and/or
the sending T22 to the fifth target end includes at least one of the following:
sending a fourth target data packet to the fifth target end, where the fourth target data packet carries T22; and
sending control plane signaling (such as RRC signaling) to the fifth target end, where the control plane signaling carries T22.

The fourth target data packet is one of the following: a forged data packet, an uplink real data packet, and a data packet in an uplink data packet set;
and/or
the sending T22 and/or T21 to an anchor gateway includes:
sending a fifth target data packet to the anchor gateway, where the fifth target data packet carries T22 and/or T21; where
the fifth target data packet is one of the following: a forged data packet, an uplink real data packet, and a data packet in an uplink data packet set.

Optionally, the sending T32 includes one of the following:
carrying T32 in a data packet of a transmitted second data packet set; and
sending control plane signaling (such as RRC signaling) to the fifth target end, where the control plane signaling carries T32.

Optionally, the third target data packet further includes identification information of the second data packet set; where
the identification information includes at least one of the following: an identifier of a data packet set and a serial number of the data packet set;
   and/or
the sixth target data packet further includes identification information of the second data packet set; where
the identification information includes at least one of the following: an identifier of a data packet set and a serial number of the data packet set.
   and/or
the fourth target data packet further includes identification information of the second data packet set; where
the identification information includes at least one of the following: an identifier of a data packet set and a serial number of the data packet set;
   and/or
the fifth target data packet further includes identification information of the second data packet set; where
the identification information includes at least one of the following: an identifier of a data packet set and a serial number of the data packet set.

Optionally, the execution module 171 is configured to obtain a data packet set delay monitoring requirement, and perform the third target operation according to data packet set delay monitoring requirement.

Optionally, the data packet set delay monitoring requirement includes at least one of the following: a type of delay monitoring and a granularity of delay monitoring.

Optionally, the type of delay monitoring includes at least one of the following: a data packet set downlink delay, a data packet set uplink delay, and a data packet set round-trip delay.

Optionally, the data packet set downlink delay includes at least one of the following: a data packet set downlink delay between the radio access network device and an anchor gateway, a data packet set downlink delay between a terminal and the anchor gateway, and a data packet set downlink delay between the terminal and the radio access network device; where
the data packet set downlink delay between the radio access network device and the anchor gateway is used to indicate a time required for transmission of one data packet set from the anchor gateway to the radio access network device;
the data packet set downlink delay between the terminal and the anchor gateway is used to indicate a time required for transmission of one data packet set from the anchor gateway to the terminal; and
the data packet set downlink delay between the terminal and the radio access network device is used to indicate a time required for transmission of one data packet set from the radio access network device to the terminal.

Optionally, the data packet set uplink delay includes at least one of the following: a data packet set uplink delay between the radio access network device and an anchor gateway, a data packet set uplink delay between a terminal and the anchor gateway, and a data packet set uplink delay between the terminal and the radio access network device; where
the data packet set uplink delay between the radio access network device and the anchor gateway is used to indicate a time required for transmission of one data packet set from the radio access network device to the anchor gateway;
the data packet set uplink delay between the terminal and the anchor gateway is used to indicate a time required for transmission of one data packet set from the terminal to the anchor gateway; and
the data packet set uplink delay between the terminal and the radio access network device is used to indicate a time required for transmission of one data packet set from the terminal to the radio access network device.

Optionally, the data packet set round-trip delay includes at least one of the following: a data packet set round-trip delay between the radio access network device and an anchor gateway, a data packet set round-trip delay between a terminal and the anchor gateway, and a data packet set round-trip delay between the terminal and the radio access network device; where
the data packet set round-trip delay between the radio access network device and the anchor gateway is used to indicate: a time required for round-trip transmission of one data packet set between radio access network device and the anchor gateway;
the data packet set round-trip delay between the terminal and the anchor gateway is used to indicate: a time required for round-trip transmission of one data packet set between the terminal and the anchor gateway; and
the data packet set round-trip delay between the terminal and the radio access network device is used to indicate a time required for round-trip transmission of one data packet set between the terminal and the radio access network device.

Optionally, the granularity of delay monitoring includes at least one of the following: a terminal granularity, a flow granularity, a radio bearer granularity, and a data packet set granularity.

The data packet set delay processing apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The data packet set delay processing apparatus provided in this embodiment of this application can implement the processes implemented in the method embodiment in FIG. 4, with the same technical effects achieved. To avoid repetition, details are not described herein again.

Refer to FIG. 18. An embodiment of this application further provides a data packet set delay processing apparatus 180, including:
an execution module 181, configured to perform a fourth target operation, where the fourth target operation includes at least one of the following operations:
recording T22;
recording T32;
sending T32 to a fifth target end;
sending T32 to an anchor gateway;
sending T22 to the fifth target end; and
sending T22 to the anchor gateway; where
T22 is one of the following: a time at which a radio access network device sends the last data packet of a first data packet set to the terminal, a time at which the terminal receives or successfully receives the last data packet of the first data packet set, and a time at which the last data packet of the first data packet set arrives at the terminal; and
T32 is one of the following: a time at which the terminal starts to wait for the radio access network device to schedule the 1st data packet of a second data packet set, a time at which the 1st data packet of the second data packet set arrives at the terminal (such as an NAS or AS), and a time at which the terminal sends the 1st data packet of the second data packet set to the radio access network device; where
the fifth target end includes one of the following: a radio access network device and a Uu interface.

In this embodiment of this application, a related operation for monitoring a data packet set downlink delay, uplink delay, and/or round-trip delay is defined, so as to ensure normal transmission of a data packet set.

Optionally, the sending T32 to a core network device includes at least one of the following:
carrying T32 in a data packet (such as header information) of a transmitted second data packet set; and
sending control plane signaling (such as RRC signaling) to the fifth target end, where the control plane signaling carries T32;
   and/or
the sending T32 to the anchor gateway includes: carrying T32 in a data packet (such as header information) of a transmitted second data packet set;
   and/or
the sending T22 to the fifth target end includes at least one of the following:
   sending a fourth target data packet to the fifth target end, where the fourth target data packet (such as header information) carries T22; and
   sending control plane signaling (such as RRC signaling) to the fifth target end, where the control plane signaling carries T22;
      and/or
   the sending T22 to the anchor gateway includes: sending a fifth target data packet to the anchor gateway, where the fifth target data packet (such as header information) carries T22; where
   the fourth target data packet is one of the following: a forged data packet, an uplink real data packet, and a data packet in an uplink data packet set; and
   the fifth target data packet is one of the following: a forged data packet, an uplink real data packet, and a data packet in an uplink data packet set.

Optionally, the fourth target data packet further includes identification information of the first data packet set;
and/or
the fourth target data packet and/or the fifth target data packet further includes identification information of the first data packet set; where
the identification information includes at least one of the following: an identifier of a data packet set and a serial number of the data packet set.

Optionally, the execution module 181 is configured to obtain a data packet set delay monitoring requirement, and perform the fourth target operation according to data packet set delay monitoring requirement.

Optionally, the data packet set delay monitoring requirement includes at least one of the following: a type of delay monitoring and a granularity of delay monitoring.

Optionally, the type of delay monitoring includes at least one of the following: a data packet set downlink delay, a data packet set uplink delay, and a data packet set round-trip delay.

Optionally, the data packet set downlink delay includes at least one of the following: a data packet set downlink delay between the radio access network device and an anchor gateway, a data packet set downlink delay between a terminal and the anchor gateway, and a data packet set downlink delay between the terminal and the radio access network device; where
the data packet set downlink delay between the radio access network device and the anchor gateway is used to indicate a time required for transmission of one data packet set from the anchor gateway to the radio access network device;
the data packet set downlink delay between the terminal and the anchor gateway is used to indicate a time required for transmission of one data packet set from the anchor gateway to the terminal; and
the data packet set downlink delay between the terminal and the radio access network device is used to indicate a time required for transmission of one data packet set from the radio access network device to the terminal.

Optionally, the data packet set uplink delay includes at least one of the following: a data packet set uplink delay between the radio access network device and an anchor gateway, a data packet set uplink delay between a terminal and the anchor gateway, and a data packet set uplink delay between the terminal and the radio access network device; where
the data packet set uplink delay between the radio access network device and the anchor gateway is used to indicate a time required for transmission of one data packet set from the radio access network device to the anchor gateway;
the data packet set uplink delay between the terminal and the anchor gateway is used to indicate a time required for transmission of one data packet set from the terminal to the anchor gateway; and
the data packet set uplink delay between the terminal and the radio access network device is used to indicate a time required for transmission of one data packet set from the terminal to the radio access network device.

Optionally, the data packet set round-trip delay includes at least one of the following: a data packet set round-trip delay between the radio access network device and an anchor gateway, a data packet set round-trip delay between a terminal and the anchor gateway, and a data packet set round-trip delay between the terminal and the radio access network device; where
the data packet set round-trip delay between the radio access network device and the anchor gateway is used to indicate: a time required for round-trip transmission of one data packet set between radio access network device and the anchor gateway;
the data packet set round-trip delay between the terminal and the anchor gateway is used to indicate: a time required for round-trip transmission of one data packet set between the terminal and the anchor gateway; and
the data packet set round-trip delay between the terminal and the radio access network device is used to indicate a time required for round-trip transmission of one data packet set between the terminal and the radio access network device.

Optionally, the granularity of delay monitoring includes at least one of the following: a terminal granularity, a flow granularity, a radio bearer granularity, and a data packet set granularity.

The data packet set delay processing apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The data packet set delay processing apparatus provided in this embodiment of this application can implement the processes implemented in the method embodiment in FIG. 5, with the same technical effects achieved. To avoid repetition, details are not described herein again.

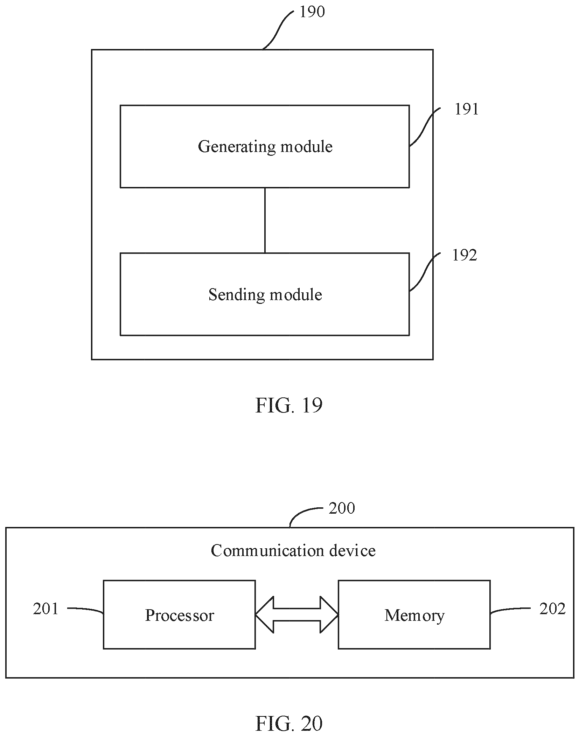

Refer to FIG. 19. An embodiment of this application further provides a data packet set delay processing apparatus 190, including:
a generating module 191, configured to generate a data packet set delay monitoring requirement; and
a sending module 192, configured to send the data packet set delay monitoring requirement.

In this embodiment of this application, a related operation for monitoring a data packet set downlink delay, uplink delay, and/or round-trip delay is defined, so as to ensure normal transmission of a data packet set.

Optionally, the data packet set delay monitoring requirement includes at least one of the following: a type of delay monitoring and a granularity of delay monitoring.

Optionally, the type of delay monitoring includes at least one of the following: a data packet set downlink delay, a data packet set uplink delay, and a data packet set round-trip delay.

Optionally, the data packet set downlink delay includes at least one of the following: a data packet set downlink delay between the radio access network device and an anchor gateway, a data packet set downlink delay between a terminal and the anchor gateway, and a data packet set downlink delay between the terminal and the radio access network device; where
the data packet set downlink delay between the radio access network device and the anchor gateway is used to indicate a time required for transmission of one data packet set from the anchor gateway to the radio access network device;
the data packet set downlink delay between the terminal and the anchor gateway is used to indicate a time required for transmission of one data packet set from the anchor gateway to the terminal; and
the data packet set downlink delay between the terminal and the radio access network device is used to indicate a time required for transmission of one data packet set from the radio access network device to the terminal.

Optionally, the data packet set uplink delay includes at least one of the following: a data packet set uplink delay between the radio access network device and an anchor gateway, a data packet set uplink delay between a terminal and the anchor gateway, and a data packet set uplink delay between the terminal and the radio access network device; where
the data packet set uplink delay between the radio access network device and the anchor gateway is used to indicate a time required for transmission of one data packet set from the radio access network device to the anchor gateway;
the data packet set uplink delay between the terminal and the anchor gateway is used to indicate a time required for transmission of one data packet set from the terminal to the anchor gateway; and
the data packet set uplink delay between the terminal and the radio access network device is used to indicate a time required for transmission of one data packet set from the terminal to the radio access network device.

Optionally, the data packet set round-trip delay includes at least one of the following: a data packet set round-trip delay between the radio access network device and an anchor gateway, a data packet set round-trip delay between a terminal and the anchor gateway, and a data packet set round-trip delay between the terminal and the radio access network device; where
the data packet set round-trip delay between the radio access network device and the anchor gateway is used to indicate: a time required for round-trip transmission of one data packet set between radio access network device and the anchor gateway;
the data packet set round-trip delay between the terminal and the anchor gateway is used to indicate: a time required for round-trip transmission of one data packet set between the terminal and the anchor gateway; and
the data packet set round-trip delay between the terminal and the radio access network device is used to indicate a time required for round-trip transmission of one data packet set between the terminal and the radio access network device.

Optionally, the granularity of delay monitoring includes at least one of the following: a terminal granularity, a flow granularity, a radio bearer granularity, and a data packet set granularity.

The data packet set delay processing apparatus in this embodiment of the application may be an electronic device, such as an electronic device with an operating system, or a component in the electronic device, such as an integrated circuit or a chip.

The data packet set delay processing apparatus provided in this embodiment of this application can implement the processes implemented in the method embodiment in FIG. 6, with the same technical effects achieved. To avoid repetition, details are not described herein again.

Optionally, as shown in FIG. 20, an embodiment of this application further provides a communication device 200, including a processor 201, a memory 202, and a program or instructions stored in the memory 202 and capable of running on the processor 201. For example, when the communication device 200 is a radio access network device and when the program or the instructions are executed by the processor 201, the steps of the foregoing embodiments of the data packet set delay processing method executed by the radio access network device are implemented, with the same technical effects achieved. When the communication device 200 is an anchor gateway, when the program or instructions are executed by the processor 201, the steps of the foregoing embodiments of the data packet set delay processing method executed by the anchor gateway are implemented, with the same technical effects achieved. When the communication device 200 is a terminal, when the program or instructions are executed by the processor 201, the steps of the foregoing embodiments of the data packet set delay processing method executed by the terminal are implemented, with the same technical effects achieved. When the communication device 200 is a core network device and when the program or the instructions are executed by the processor 201, the steps of the foregoing embodiments of the data packet set delay processing method executed by the core network device are implemented, with the same technical effects achieved. To avoid repetition, details are not described herein again.

An embodiment of this application further provides a terminal, including a processor and a communication interface, where the processor is configured to perform a third target operation, and the third target operation includes at least one of the following operations:
a fifth operation corresponding to a data packet set downlink delay;
a sixth operation corresponding to the data packet set downlink delay;
a fifth operation corresponding to a data packet set uplink delay;
a sixth operation corresponding to the data packet set uplink delay;
a fifth operation corresponding to a data packet set delay; and
a sixth operation corresponding to the data packet set delay.

Alternatively,
the processor 181 is configured to perform a fourth target operation, where the fourth target operation includes at least one of the following operations:
recording T22;
recording T32;
sending T32 to a fifth target end;
sending T32 to an anchor gateway;
sending T22 to the fifth target end; and
sending T22 to the anchor gateway; where
T22 is one of the following: a time at which a radio access network device sends the last data packet of a first data packet set to the terminal, a time at which the terminal receives or successfully receives the last data packet of the first data packet set, and a time at which the last data packet of the first data packet set arrives at the terminal; and
T32 is one of the following: a time at which the terminal starts to wait for the radio access network device to schedule the 1st data packet of a second data packet set, a time at which the 1st data packet of the second data packet set arrives at the terminal (such as an NAS or AS), and a time at which the terminal sends the 1st data packet of the second data packet set to the radio access network device; where
the fifth target end includes one of the following: a radio access network device and a Uu interface.

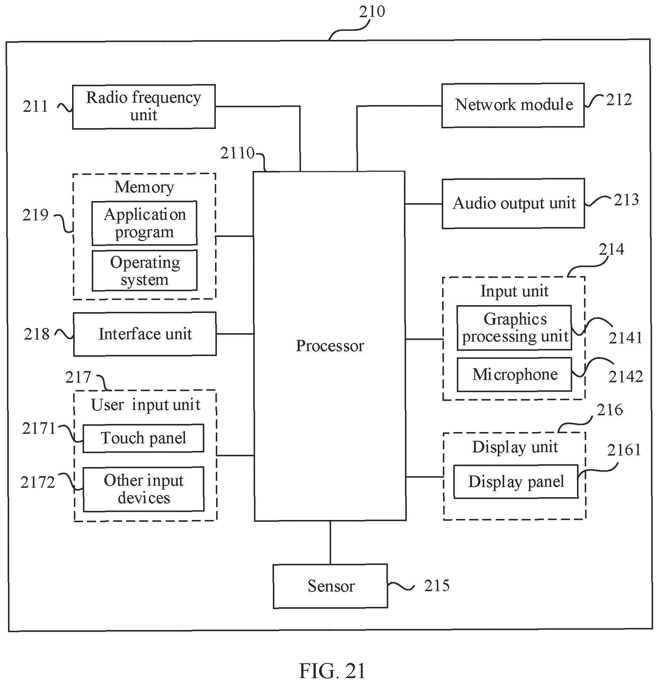

The terminal embodiments correspond to the foregoing terminal-side method embodiments, and the implementation processes and implementations of the foregoing method embodiments can be applied to the terminal embodiments, with the same technical effects achieved. Specifically, FIG. 21 is a schematic diagram of a hardware structure of a terminal for implementing the embodiments of this application.

The terminal 210 includes but is not limited to at least part of components such as a radio frequency unit 211, a network module 212, an audio output unit 213, an input unit 214, a sensor 215, a display unit 216, a user input unit 217, an interface unit 218, a memory 219, and a processor 2110.

Persons skilled in the art can understand that the terminal 210 may further include a power supply (for example, a battery) supplying power to the components, and the power supply may be logically connected to the processor 2110 through a power management system. In this way, functions such as charge management, discharge management, and power consumption management are implemented by using the power management system. The structure of the terminal shown in FIG. 21 does not constitute any limitation on the terminal. The terminal may include more or fewer components than shown in the figure, or a combination of some components, or the components disposed differently. Details are not described herein again.

It can be understood that in this embodiment of this application, the input unit 214 may include a graphics processing unit (Graphics Processing Unit, GPU) 2141 and a microphone 2142. The graphics processing unit 2141 processes image data of a still picture or video obtained by an image capture apparatus (such as a camera) in a video capture mode or an image capture mode. The display unit 216 may include a display panel 2161, and the display panel 2161 may be configured in a form of a liquid crystal display, an organic light-emitting diode, and the like. The user input unit 217 may include at least one of a touch panel 2171 and other input devices 2172. The touch panel 2171 is also referred to as a touchscreen. The touch panel 2171 may include two parts: a touch detection apparatus and a touch controller. The other input devices 2172 may include but are not limited to a physical keyboard, a function key (such as a volume control key or a power on/off key), a trackball, a mouse, a joystick, and the like. Details are not described herein.

In this embodiment of this application, the radio frequency unit 211 receives downlink data from a network-side device, and then sends the downlink data to the processor 2110 for processing. In addition, the radio frequency unit 211 may send uplink data to the network-side device. Generally, the radio frequency unit 211 includes but is not limited to an antenna, an amplifier, a transceiver, a coupler, a low noise amplifier, a duplexer, and the like.

The memory 219 may be configured to store software programs or instructions and various data. The memory 219 may include a first storage area for storing a program or instructions and a second storage area for storing data. The first storage area may store an operating system, an application program or instruction required by at least one function (for example, a sound playback function or an image playback function), and the like. In addition, the memory 219 may include a volatile memory or a non-volatile memory, or the memory 219 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 219 in the embodiments of this application includes but is not limited to these and any other suitable types of memories.

The processor 2110 may include one or more processing units. Optionally, an application processor and a modem processor may be integrated in the processor 2110. The application processor primarily processes operations involving an operating system, user interfaces, application programs, and the like. The modem processor primarily processes radio communication signals, for example, being a baseband processor. It can be understood that the modem processor may alternatively be not integrated in the processor 2110.

In some embodiments:
the processor 2110 is configured to perform a third target operation, where the third target operation includes at least one of the following operations:
a fifth operation corresponding to a data packet set downlink delay;
a sixth operation corresponding to the data packet set downlink delay;
a fifth operation corresponding to a data packet set uplink delay;
a sixth operation corresponding to the data packet set uplink delay;
a fifth operation corresponding to a data packet set delay; and
a sixth operation corresponding to the data packet set delay.

In this embodiment of this application, a related operation for monitoring a data packet set downlink delay, uplink delay, and/or round-trip delay by the terminal is defined, so as to ensure normal transmission of a data packet set.

Optionally, the fifth operation corresponding to the data packet set downlink delay includes at least one of the following:
obtaining T1 and/or T21;
recording T22;
based on T21-T1, determining a data packet set downlink delay (for example, a value is T21-T1) between a radio access network device and an anchor gateway;
based on T22-T1, determining a data packet set downlink delay (for example, a value is T22-T1) between the terminal and the anchor gateway;
based on T22-T21, determining a data packet set downlink delay (for example, a value is T22-T21) between the terminal and the radio access network device; and
sending determined delay information, where the delay information includes at least one of the following: a data packet set downlink delay between the radio access network device and the anchor gateway, a data packet set downlink delay between the terminal and the anchor gateway, and a data packet set downlink delay between the terminal and the radio access network device; where
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device; and
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal.

Optionally, the sixth operation corresponding to the data packet set downlink delay includes at least one of the following:
recording T22;
obtaining T21;
sending T22 to the fifth target end; and
sending T22 and/or T21 to an anchor gateway; where
T21 is one of the following: a time at which the radio access network device receives the last data packet of a first data packet set, and a time at which the last data packet of the first data packet set arrives at the radio access network device;
   and/or
T22 is one of the following: a time at which a radio access network device sends the last data packet of a first data packet set to the terminal, a time at which the terminal receives or successfully receives the last data packet of the first data packet set, and a time at which the last data packet of the first data packet set arrives at the terminal; where
the fifth target end includes one of the following: a radio access network device and a Uu interface.

Optionally, the fifth operation corresponding to the data packet set uplink delay includes at least one of the following:
obtaining T4;
obtaining T31;
recording T32;
based on T4-T31, determining a data packet set uplink delay (for example, a value is T4-T31) between a radio access network device and an anchor gateway;
based on T4-T32, determining a data packet set uplink delay (for example, a value is T4-T32) between the terminal and the anchor gateway;
based on T31-T32, determining a data packet set uplink delay (for example, a value is T31-T32) between the terminal and the radio access network device; and
sending determined delay information, where the delay information includes at least one of the following: a data packet set uplink delay between the radio access network device and the anchor gateway, a data packet set uplink delay between the terminal and the anchor gateway, and a data packet set uplink delay between the terminal and the radio access network device; where
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device;
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

Optionally, the sixth operation corresponding to the data packet set uplink delay includes at least one of the following:
recording T32; and
sending T32; where
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device.

Optionally, the fifth operation corresponding to the data packet set delay includes at least one of the following:
obtaining T1 and/or T21;
recording T22;
obtaining T4;
recording T32;
obtaining T31;
based on (T21-T1+T4-T31)/2, determining a data packet set uplink delay and/or downlink delay (for example, a value is (T21-T1+T4-T31)/2) between the radio access network device and an anchor gateway;
based on (T22-T1+T4-T32)/2, determining a data packet set uplink delay and/or downlink delay (for example, a value is (T22-T1+T4-T32)/2) between a terminal and the anchor gateway;
based on (T22-T21+T32-T31)/2, determining a data packet set uplink delay and/or downlink delay (for example, a value is (T22-T21+T32-T31)/2) between the terminal and the radio access network device;
based on (T21-T1+T4-T31), determining a data packet set round-trip delay (for example, a value is (T21-T1+T4-T31)) between the radio access network device and the anchor gateway;
based on (T22-T1+T4-T32), determining a data packet set round-trip delay (for example, a value is (T22-T1+T4-T32)/2) between the terminal and the anchor gateway;
based on (T22-T21+T32-T31), determining a data packet set round-trip delay (for example, a value is (T22-T21+T32-T31)) between the terminal and the radio access network device; and
sending determined delay information, where the delay information includes at least one of the following: a data packet set round-trip delay between the radio access network device and the anchor gateway, a data packet set round-trip delay between the terminal and the anchor gateway, and a data packet set round-trip delay between the terminal and radio access network device; where
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which a radio access network device sends the last data packet of the first data packet set to the terminal, a time at which the terminal receives or successfully receives the last data packet of the first data packet set, and a time at which the last data packet of the first data packet set arrives at the terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal (such as an NAS or AS), and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; where
the first target end is one of the following: an N3 interface and an anchor gateway.

Optionally, the obtaining T1 and/or T21 includes:
obtaining T1 and/or T21 from a data packet of a received first data packet set.

Optionally, the obtaining T4 includes: obtaining T4 from the received third target data packet and/or sixth target data packet; where
the third target data packet is one of the following: a forged data packet, a downlink real data packet, and a data packet in a downlink data packet set; and
the sixth target data packet is one of the following: a forged data packet, a downlink real data packet, and a data packet in a downlink data packet set;
   and/or
the obtaining T31 includes obtaining T31 from the received third target data packet; where
the third target data packet is one of the following: a forged data packet, a downlink real data packet, and a data packet in a downlink data packet set.

Optionally, the sixth operation corresponding to the data packet set delay includes at least one of the following:
recording T32;
sending T32;
recording T22;
obtaining T21;
sending T22 to the fifth target end; and
sending T22 and/or T21 to an anchor gateway; where
T22 is one of the following: a time at which a radio access network device sends the last data packet of a first data packet set to the terminal, a time at which the terminal receives or successfully receives the last data packet of the first data packet set, and a time at which the last data packet of the first data packet set arrives at the terminal;
T32 ...; and
the fifth target end includes one of the following: a radio access network device and a Uu interface.

Optionally, the obtaining T21 includes: obtaining T21 from a data packet of a received first data packet set;
and/or
the sending T22 to the fifth target end includes at least one of the following:
sending a fourth target data packet to the fifth target end, where the fourth target data packet carries T22; and
sending control plane signaling (such as RRC signaling) to the fifth target end, where the control plane signaling carries T22.

The fourth target data packet is one of the following: a forged data packet, an uplink real data packet, and a data packet in an uplink data packet set;
and/or
the sending T22 and/or T21 to an anchor gateway includes:
sending a fifth target data packet to the anchor gateway, where the fifth target data packet carries T22 and/or T21; where
the fifth target data packet is one of the following: a forged data packet, an uplink real data packet, and a data packet in an uplink data packet set.

Optionally, the sending T32 includes one of the following:
carrying T32 in a data packet of a transmitted second data packet set; and
sending control plane signaling (such as RRC signaling) to the fifth target end, where the control plane signaling carries T32.

Optionally, the third target data packet further includes identification information of the second data packet set; where
the identification information includes at least one of the following: an identifier of a data packet set and a serial number of the data packet set;
   and/or
the sixth target data packet further includes identification information of the second data packet set; where
the identification information includes at least one of the following: an identifier of a data packet set and a serial number of the data packet set;
   and/or
the fourth target data packet further includes identification information of the second data packet set; where
the identification information includes at least one of the following: an identifier of a data packet set and a serial number of the data packet set;
   and/or
the fifth target data packet further includes identification information of the second data packet set; where
the identification information includes at least one of the following: an identifier of a data packet set and a serial number of the data packet set.

Optionally, the processor 2110 is configured to obtain a data packet set delay monitoring requirement, and perform the third target operation according to data packet set delay monitoring requirement.

Optionally, the data packet set delay monitoring requirement includes at least one of the following: a type of delay monitoring and a granularity of delay monitoring.

Optionally, the type of delay monitoring includes at least one of the following: a data packet set downlink delay, a data packet set uplink delay, and a data packet set round-trip delay.

Optionally, the data packet set downlink delay includes at least one of the following: a data packet set downlink delay between the radio access network device and an anchor gateway, a data packet set downlink delay between a terminal and the anchor gateway, and a data packet set downlink delay between the terminal and the radio access network device; where
the data packet set downlink delay between the radio access network device and the anchor gateway is used to indicate a time required for transmission of one data packet set from the anchor gateway to the radio access network device;
the data packet set downlink delay between the terminal and the anchor gateway is used to indicate a time required for transmission of one data packet set from the anchor gateway to the terminal; and
the data packet set downlink delay between the terminal and the radio access network device is used to indicate a time required for transmission of one data packet set from the radio access network device to the terminal.

Optionally, the data packet set uplink delay includes at least one of the following: a data packet set uplink delay between the radio access network device and an anchor gateway, a data packet set uplink delay between a terminal and the anchor gateway, and a data packet set uplink delay between the terminal and the radio access network device; where
the data packet set uplink delay between the radio access network device and the anchor gateway is used to indicate a time required for transmission of one data packet set from the radio access network device to the anchor gateway;
the data packet set uplink delay between the terminal and the anchor gateway is used to indicate a time required for transmission of one data packet set from the terminal to the anchor gateway; and
the data packet set uplink delay between the terminal and the radio access network device is used to indicate a time required for transmission of one data packet set from the terminal to the radio access network device.

Optionally, the data packet set round-trip delay includes at least one of the following: a data packet set round-trip delay between the radio access network device and an anchor gateway, a data packet set round-trip delay between a terminal and the anchor gateway, and a data packet set round-trip delay between the terminal and the radio access network device; where
the data packet set round-trip delay between the radio access network device and the anchor gateway is used to indicate: a time required for round-trip transmission of one data packet set between radio access network device and the anchor gateway;
the data packet set round-trip delay between the terminal and the anchor gateway is used to indicate: a time required for round-trip transmission of one data packet set between the terminal and the anchor gateway; and
the data packet set round-trip delay between the terminal and the radio access network device is used to indicate a time required for round-trip transmission of one data packet set between the terminal and the radio access network device.

Optionally, the granularity of delay monitoring includes at least one of the following: a terminal granularity, a flow granularity, a radio bearer granularity, and a data packet set granularity.

In some other embodiments:
the processor 2110 is configured to perform a fourth target operation, where the fourth target operation includes at least one of the following operations:
recording T22;
recording T32;
sending T32 to a fifth target end;
sending T32 to an anchor gateway;
sending T22 to the fifth target end; and
sending T22 to the anchor gateway; where
T22 is one of the following: a time at which a radio access network device sends the last data packet of a first data packet set to the terminal, a time at which the terminal receives or successfully receives the last data packet of the first data packet set, and a time at which the last data packet of the first data packet set arrives at the terminal; and
T32 is one of the following: a time at which the terminal starts to wait for the radio access network device to schedule the 1st data packet of a second data packet set, a time at which the 1st data packet of the second data packet set arrives at the terminal (such as an NAS or AS), and a time at which the terminal sends the 1st data packet of the second data packet set to the radio access network device; where
the fifth target end includes one of the following: a radio access network device and a Uu interface.

In this embodiment of this application, a related operation for monitoring a data packet set downlink delay, uplink delay, and/or round-trip delay by the terminal is defined, so as to ensure normal transmission of a data packet set.

Optionally, the sending T32 to a core network device includes at least one of the following:
carrying T32 in a data packet (such as header information) of a transmitted second data packet set; and
sending control plane signaling (such as RRC signaling) to the fifth target end, where the control plane signaling carries T32;
   and/or
the sending T32 to the anchor gateway includes: carrying T32 in a data packet (such as header information) of a transmitted second data packet set;
   and/or
the sending T22 to the fifth target end includes at least one of the following:
   sending a fourth target data packet to the fifth target end, where the fourth target data packet (such as header information) carries T22; and
   sending control plane signaling (such as RRC signaling) to the fifth target end, where the control plane signaling carries T22;
      and/or
   the sending T22 to the anchor gateway includes: sending a fifth target data packet to the anchor gateway, where the fifth target data packet (such as header information) carries T22.

The fourth target data packet is one of the following: a forged data packet, an uplink real data packet, and a data packet in an uplink data packet set; and
the fifth target data packet is one of the following: a forged data packet, an uplink real data packet, and a data packet in an uplink data packet set.

Optionally, the fourth target data packet further includes identification information of the first data packet set;
and/or
the fourth target data packet and/or the fifth target data packet further includes identification information of the first data packet set; where
the identification information includes at least one of the following: an identifier of a data packet set and a serial number of the data packet set.

Optionally, the processor 2110 is configured to obtain a data packet set delay monitoring requirement, and perform the fourth target operation according to data packet set delay monitoring requirement.

Optionally, the data packet set delay monitoring requirement includes at least one of the following: a type of delay monitoring and a granularity of delay monitoring.

Optionally, the type of delay monitoring includes at least one of the following: a data packet set downlink delay, a data packet set uplink delay, and a data packet set round-trip delay.

Optionally, the data packet set downlink delay includes at least one of the following: a data packet set downlink delay between the radio access network device and an anchor gateway, a data packet set downlink delay between a terminal and the anchor gateway, and a data packet set downlink delay between the terminal and the radio access network device; where
the data packet set downlink delay between the radio access network device and the anchor gateway is used to indicate a time required for transmission of one data packet set from the anchor gateway to the radio access network device;
the data packet set downlink delay between the terminal and the anchor gateway is used to indicate a time required for transmission of one data packet set from the anchor gateway to the terminal; and
the data packet set downlink delay between the terminal and the radio access network device is used to indicate a time required for transmission of one data packet set from the radio access network device to the terminal.

Optionally, the data packet set uplink delay includes at least one of the following: a data packet set uplink delay between the radio access network device and an anchor gateway, a data packet set uplink delay between a terminal and the anchor gateway, and a data packet set uplink delay between the terminal and the radio access network device; where
the data packet set uplink delay between the radio access network device and the anchor gateway is used to indicate a time required for transmission of one data packet set from the radio access network device to the anchor gateway;
the data packet set uplink delay between the terminal and the anchor gateway is used to indicate a time required for transmission of one data packet set from the terminal to the anchor gateway; and
the data packet set uplink delay between the terminal and the radio access network device is used to indicate a time required for transmission of one data packet set from the terminal to the radio access network device.

Optionally, the data packet set round-trip delay includes at least one of the following: a data packet set round-trip delay between the radio access network device and an anchor gateway, a data packet set round-trip delay between a terminal and the anchor gateway, and a data packet set round-trip delay between the terminal and the radio access network device; where
the data packet set round-trip delay between the radio access network device and the anchor gateway is used to indicate: a time required for round-trip transmission of one data packet set between radio access network device and the anchor gateway;
the data packet set round-trip delay between the terminal and the anchor gateway is used to indicate: a time required for round-trip transmission of one data packet set between the terminal and the anchor gateway; and
the data packet set round-trip delay between the terminal and the radio access network device is used to indicate a time required for round-trip transmission of one data packet set between the terminal and the radio access network device.

Optionally, the granularity of delay monitoring includes at least one of the following: a terminal granularity, a flow granularity, a radio bearer granularity, and a data packet set granularity.

An embodiment of this application further provides a network-side device, including a processor and a communication interface, where the processor is configured to perform a first target operation, and the first target operation includes at least one of the following operations:
a first operation corresponding to a data packet set downlink delay;
a second operation corresponding to the data packet set downlink delay;
a first operation corresponding to a data packet set uplink delay;
a second operation corresponding to the data packet set uplink delay;
a first operation corresponding to a data packet set delay; and
a second operation corresponding to the data packet set delay.

The network-side device embodiments correspond to the method embodiments executed by the radio access network device, and the implementation processes and implementations of the foregoing method embodiments executed by the radio access network device can be applied to the network-side device embodiments, with the same technical effects achieved.

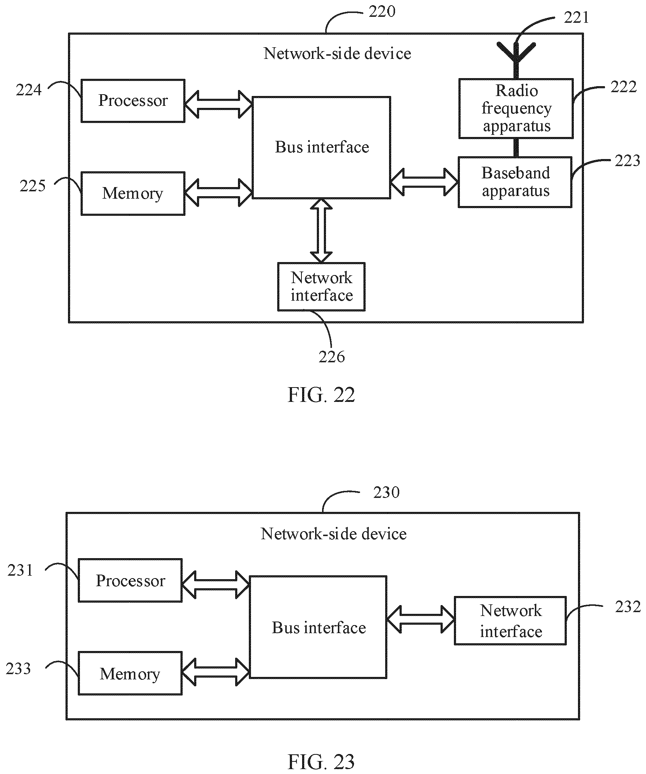

Specifically, an embodiment of this application further provides a network-side device. As shown in FIG. 22, the network-side device 220 includes an antenna 221, a radio frequency apparatus 222, a baseband apparatus 223, a processor 224, and a memory 225. The antenna 221 is connected to the radio frequency apparatus 222. In an uplink direction, the radio frequency apparatus 222 receives information by using the antenna 221, and sends the received information to the baseband apparatus 223 for processing. In a downlink direction, the baseband apparatus 223 processes to-be-sent information, and sends the information to the radio frequency apparatus 222; and the radio frequency apparatus 222 processes the received information and then sends the information out by using the antenna 221.

The method executed by the network-side device in the foregoing embodiments can be implemented in the baseband apparatus 223, and the baseband apparatus 223 includes a baseband processor.

The baseband apparatus 223 may include, for example, at least one baseband board, where a plurality of chips are disposed on the baseband board. As shown in FIG. 22, one of the chips is, for example, a baseband processor, and is connected to the memory 225 through the bus interface, to invoke a program in the memory 225 to perform the operations of the network device shown in the foregoing method embodiments.

The network-side device may further include a network interface 226, where the interface is, for example, a common public radio interface (common public radio interface, CPRI).

Specifically, the network-side device 220 in this embodiment of the present invention further includes: instructions or a program stored in the memory 225 and capable of running on the processor 224. The processor 224 invokes the instructions or program in the memory 225 to execute the method executed by the modules shown in FIG. 15, with the same technical effects achieved. To avoid repetition, details are not repeated herein.

Specifically, an embodiment of this application further provides a network-side device. As shown in FIG. 23, the network-side device 230 includes a processor 231, a network interface 232, and a memory 233. The network interface 232 is, for example, a common public radio interface (common public radio interface, CPRI).

Specifically, the network-side device 230 in this embodiment of the present invention further includes: instructions or a program stored in the memory 233 and capable of running on the processor 231. The processor 231 invokes the instructions or program in the memory 233 to execute the method executed by the modules shown in FIG. 16 or FIG. 19, with the same technical effects achieved. To avoid repetition, details are not repeated herein.

An embodiment of this application further provides a readable storage medium, where a program or instructions is stored in the readable storage medium. When the program or the instructions are executed by a processor, the processes of the foregoing embodiments of the data packet set delay processing method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiment of the data packet set delay processing method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the data packet set delay processing method, with the same technical effects achieved. To avoid repetition, details are not repeated herein.

An embodiment of this application further provides a communication system, including a terminal, a radio access network device, an anchor gateway, and a core network device, where the radio access network device can be configured to perform the steps of the data packet set delay processing method executed by the radio access network device, the anchor gateway can be configured to perform the steps of the data packet set delay processing method executed by the anchor network, the terminal can be configured to perform the steps of the data packet set delay processing method executed by the terminal, and the core network device can be configured to perform the steps of the data packet set delay processing method executed by the core network device.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A data packet set delay processing method, comprising:
performing, by a radio access network device, a first target operation, wherein the first target operation comprises at least one of the following operations:
a first operation corresponding to a data packet set downlink delay;
a second operation corresponding to the data packet set downlink delay;
a first operation corresponding to a data packet set uplink delay;
a second operation corresponding to the data packet set uplink delay;
a first operation corresponding to a data packet set delay; and
a second operation corresponding to the data packet set delay.

2. The method according to claim 1, wherein the first operation corresponding to the data packet set downlink delay comprises at least one of the following:
obtaining T1;
recording T21;
obtaining T22;
based on T21-T1, determining a data packet set downlink delay between the radio access network device and an anchor gateway;
based on T22-T1, determining a data packet set downlink delay between a terminal and the anchor gateway;
based on T22-T21, determining a data packet set downlink delay between the terminal and the radio access network device; and
sending determined delay information, wherein the delay information comprises at least one of the following: a data packet set downlink delay between the radio access network device and the anchor gateway, a data packet set downlink delay between the terminal and the anchor gateway, and a data packet set downlink delay between the terminal and the radio access network device; wherein
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device; and
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal.

3. The method according to claim 1, wherein the second operation corresponding to the data packet set downlink delay comprises at least one of the following:
obtaining T1;
recording T21;
obtaining T22;
sending T21 and/or T22 to a first target end; and
sending T21 and/or T1 to a second target end; wherein
T1 is one of the following: a time at which an anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
the first target end is one of the following: an N3 interface and an anchor gateway; and
the second target end is one of the following: a Uu interface and a terminal.

4. The method according to claim 1, wherein the first operation corresponding to the data packet set uplink delay comprises at least one of the following:
obtaining T4;
recording T31;
obtaining T32;
based on T4-T31, determining a data packet set uplink delay between the radio access network device and an anchor gateway;
based on T4-T32, determining a data packet set uplink delay between a terminal and the anchor gateway;
based on T31-T32, determining a data packet set uplink delay between the terminal and the radio access network device; and
sending determined delay information, wherein the delay information comprises at least one of the following: a data packet set uplink delay between the radio access network device and the anchor gateway, a data packet set uplink delay between the terminal and the anchor gateway, and a data packet set uplink delay between the terminal and the radio access network device; wherein
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal, and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; wherein
the first target end is one of the following: an N3 interface and an anchor gateway.

5. The method according to claim 1, wherein the second operation corresponding to the data packet set uplink delay comprises at least one of the following:
recording T31;
obtaining T32;
obtaining T4;
sending T31 and/or T32 to a first target end; and
sending T31 and/or T4 to a second target end; wherein
the first target end is one of the following: an N3 interface and an anchor gateway;
the second target end is one of the following: a Uu interface and a terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal, and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

6. The method according to claim 1, wherein the first operation corresponding to the data packet set delay comprises at least one of the following:
obtaining T1;
recording T21;
obtaining T22;
obtaining T4;
recording T31;
obtaining T32;
based on (T21-T1+T4-T31)/2, determining a data packet set uplink delay and/or downlink delay between the radio access network device and an anchor gateway;
based on (T22-T1+T4-T32)/2, determining a data packet set uplink delay and/or downlink delay between a terminal and the anchor gateway;
based on (T22-T21+T32-T31)/2, determining a data packet set uplink delay and/or downlink delay between the terminal and the radio access network device;
based on (T21-T1+T4-T31), determining a data packet set round-trip delay between the radio access network device and the anchor gateway;
based on (T22-T1+T4-T32), determining a data packet set round-trip delay between the terminal and the anchor gateway;
based on (T22-T21+T32-T31), determining a data packet set round-trip delay between the terminal and the radio access network device; and
sending determined delay information, wherein the delay information comprises at least one of the following: a data packet set round-trip delay between the radio access network device and the anchor gateway, a data packet set round-trip delay between the terminal and the anchor gateway, and a data packet set round-trip delay between the terminal and radio access network device; wherein
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal, and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; wherein
the first target end is one of the following: an N3 interface and an anchor gateway.

7. The method according to claim 1, wherein the second operation corresponding to the data packet set delay comprises at least one of the following:
obtaining T1;
recording T21;
obtaining T22;
recording T31;
obtaining T32;
obtaining T4;
sending T21 and/or T22 to a first target end;
sending T21 and/or T1 to a second target end;
sending T31 and/or T32 to the first target end; and
sending T31 and/or T4 to the second target end; wherein
the first target end is one of the following: an N3 interface and an anchor gateway;
the second target end is one of the following: a Uu interface and a terminal;
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal, and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

8. The method according to claim 3 or 7, wherein
the sending T21 and/or T22 to a first target end comprises: sending a first target data packet to the first target end, wherein the first target data packet carries T21 and/or T22;
and/or
the sending T21 and/or T1 to a second target end comprises: carrying T21 and/or T1 in a data packet of the first data packet set sent to the second target end; wherein
the first target data packet is one of the following: a forged data packet, an uplink real data packet, and a data packet in an uplink data packet set.

9. The method according to claim 5 or 7, wherein
the sending T31 and/or T32 to the first target end comprises: carrying T31 and/or T32 in a data packet of the second data packet set sent to the first target end;
and/or
the sending T31 and/or T4 to the second target end comprises: sending a third target data packet to the second target end, wherein the third target data packet carries T31 and/or T4; wherein
the third target data packet is one of the following: a forged data packet, a downlink real data packet, and a data packet in a downlink data packet set.

10. The method according to claim 4, 5, 6, or 7, wherein
the obtaining T32 comprises one of the following: obtaining T32 from a data packet of a received second data packet set, and receiving control plane signaling, wherein the control plane signaling carries T32;
and/or
the obtaining T4 comprises obtaining T4 from a received second target data packet; wherein
the second target data packet is one of the following: a forged data packet, a downlink real data packet, and a data packet in a downlink data packet set.

11. The method according to claim 2, 3, 6, or 7, wherein
the obtaining T1 comprises: obtaining T1 from a data packet of a received first data packet set;
and/or
the obtaining T22 comprises at least one of the following:
determining a time for sending or successfully sending the last data packet of the first data packet set as T22;
determining a time for receiving an ACK of the last data packet of the first data packet set from the terminal as T22;
receiving a fourth target data packet, wherein the fourth target data packet carries T22; and
receiving T22 from a control plane between the terminal and the radio access network device; wherein
the fourth target data packet is one of the following: a forged data packet, an uplink real data packet, and a data packet in an uplink data packet set.

12. The method according to claim 8, 9, 10, or 11, wherein
the first target data packet further comprises identification information of the first data packet set; wherein
the identification information comprises at least one of the following: an identifier of a data packet set and a serial number of the data packet set;
and/or
the second target data packet further comprises identification information of the second data packet set; wherein
the identification information comprises at least one of the following: an identifier of a data packet set and a serial number of the data packet set;
and/or
the third target data packet further comprises identification information of the second data packet set; wherein
the identification information comprises at least one of the following: an identifier of a data packet set and a serial number of the data packet set;
and/or
the fourth target data packet further comprises identification information of the second data packet set; wherein
the identification information comprises at least one of the following: an identifier of a data packet set and a serial number of the data packet set.

13. The method according to claim 1, wherein the performing, by a radio access network device, a first target operation comprises:
obtaining, by the radio access network device, a data packet set delay monitoring requirement; and
performing, by the radio access network device, the first target operation according to the data packet set delay monitoring requirement.

14. The method according to claim 13, wherein the data packet set delay monitoring requirement comprises at least one of the following: a type of delay monitoring and a granularity of delay monitoring.

15. The method according to claim 14, wherein the type of delay monitoring comprises at least one of the following: a data packet set downlink delay, a data packet set uplink delay, and a data packet set round-trip delay.

16. The method according to claim 1 or 15, wherein the data packet set downlink delay comprises at least one of the following: a data packet set downlink delay between the radio access network device and an anchor gateway, a data packet set downlink delay between a terminal and the anchor gateway, and a data packet set downlink delay between the terminal and the radio access network device; wherein
the data packet set downlink delay between the radio access network device and the anchor gateway is used to indicate a time required for transmission of one data packet set from the anchor gateway to the radio access network device;
the data packet set downlink delay between the terminal and the anchor gateway is used to indicate a time required for transmission of one data packet set from the anchor gateway to the terminal; and
the data packet set downlink delay between the terminal and the radio access network device is used to indicate a time required for transmission of one data packet set from the radio access network device to the terminal.

17. The method according to claim 1 or 15, wherein the data packet set uplink delay comprises at least one of the following: a data packet set uplink delay between the radio access network device and an anchor gateway, a data packet set uplink delay between a terminal and anchor gateway, and a data packet set uplink delay between the terminal and the radio access network device; wherein
the data packet set uplink delay between the radio access network device and the anchor gateway is used to indicate a time required for transmission of one data packet set from the radio access network device to the anchor gateway;
the data packet set uplink delay between the terminal and the anchor gateway is used to indicate a time required for transmission of one data packet set from the terminal to the anchor gateway; and
the data packet set uplink delay between the terminal and the radio access network device is used to indicate a time required for transmission of one data packet set from the terminal to the radio access network device.

18. The method according to claim 1 or 15, wherein the data packet set round-trip delay comprises at least one of the following: a data packet set round-trip delay between the radio access network device and an anchor gateway, a data packet set round-trip delay between a terminal and the anchor gateway, and a data packet set round-trip delay between the terminal and the radio access network device; wherein
the data packet set round-trip delay between the radio access network device and the anchor gateway is used to indicate: a time required for round-trip transmission of one data packet set between radio access network device and the anchor gateway;
the data packet set round-trip delay between the terminal and the anchor gateway is used to indicate: a time required for round-trip transmission of one data packet set between the terminal and the anchor gateway; and
the data packet set round-trip delay between the terminal and the radio access network device is used to indicate a time required for round-trip transmission of one data packet set between the terminal and the radio access network device.

19. The method according to claim 14, wherein the granularity of delay monitoring comprises at least one of the following: a terminal granularity, a flow granularity, a radio bearer granularity, and a data packet set granularity.

20. A data packet set delay processing method, comprising:
performing, by an anchor gateway, a second target operation, wherein the second target operation comprises at least one of the following:
a third operation corresponding to a data packet set downlink delay;
a fourth operation corresponding to the data packet set downlink delay;
a third operation corresponding to a data packet set uplink delay;
a fourth operation corresponding to the data packet set uplink delay;
a third operation corresponding to a data packet set delay; and
a fourth operation corresponding to the data packet set delay.

21. The method according to claim 20, wherein the third operation corresponding to the data packet set downlink delay comprises at least one of the following:
recording T1;
obtaining T21 and/or T22;
based on T21-T1, determining a data packet set downlink delay between a radio access network device and the anchor gateway;
based on T22-T1, determining a data packet set downlink delay between a terminal and the anchor gateway;
based on T22-T21, determining a data packet set downlink delay between the terminal and the radio access network device; and
sending determined delay information, wherein the delay information comprises at least one of the following: a data packet set downlink delay between the radio access network device and the anchor gateway, a data packet set downlink delay between the terminal and the anchor gateway, and a data packet set downlink delay between the terminal and the radio access network device; wherein
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device; and
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal.

22. The method according to claim 20, wherein the fourth operation corresponding to the data packet set downlink delay comprises at least one of the following:
recording T1;
sending T1 to a third target end; and
sending T1 to a fourth target end; wherein
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
the third target end is one of the following: an N3 interface, an N9 interface, and a radio access network device; and
the fourth target end is one of the following: a terminal.

23. The method according to claim 20, wherein the third operation corresponding to the data packet set uplink delay comprises at least one of the following:
recording T4;
obtaining T31 and/or T32;
based on T4-T31, determining a data packet set uplink delay between a radio access network device and the anchor gateway;
based on T4-T32, determining a data packet set uplink delay between a terminal and the anchor gateway;
based on T31-T32, determining a data packet set uplink delay between the terminal and the radio access network device; and
sending determined delay information, wherein the delay information comprises at least one of the following: a data packet set uplink delay between the radio access network device and the anchor gateway, a data packet set uplink delay between the terminal and the anchor gateway, and a data packet set uplink delay between the terminal and the radio access network device; wherein
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal, and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; wherein
the first target end is one of the following: an N3 interface and an anchor gateway.

24. The method according to claim 20, wherein the fourth operation corresponding to the data packet set uplink delay comprises at least one of the following:
recording T4;
sending T4 to a third target end; and
sending T4 to a fourth target end; wherein
the third target end is one of the following: an N3 interface, an N9 interface, and a radio access network device;
the fourth target end is one of the following: a terminal; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

25. The method according to claim 20, wherein the third operation corresponding to the data packet set delay comprises at least one of the following:
recording T1;
obtaining T21 and/or T22;
recording T4;
obtaining T31 and/or T32;
based on (T21-T1+T4-T31)/2, determining a data packet set uplink delay and/or downlink delay between a radio access network device and the anchor gateway;
based on (T22-T1+T4-T32)/2, determining a data packet set uplink delay and/or downlink delay between a terminal and the anchor gateway;
based on (T22-T21+T32-T31)/2, determining a data packet set uplink delay and/or downlink delay between the terminal and the radio access network device;
based on (T21-T1+T4-T31), determining a data packet set round-trip delay between the radio access network device and the anchor gateway;
based on (T22-T1+T4-T32), determining a data packet set round-trip delay between the terminal and the anchor gateway;
based on (T22-T21+T32-T31), determining a data packet set round-trip delay between the terminal and the radio access network device; and
sending determined delay information, wherein the delay information comprises at least one of the following: a data packet set round-trip delay between the radio access network device and the anchor gateway, a data packet set round-trip delay between the terminal and the anchor gateway, and a data packet set round-trip delay between the terminal and radio access network device; wherein
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal, and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; wherein
the first target end is one of the following: an N3 interface and an anchor gateway.

26. The method according to claim 21 or 25, wherein
the obtaining T21 and/or T22 comprises at least one of the following:
obtaining T21 and/or T22 from a received first target data packet; and
obtaining T21 and/or T22 from a received fifth target data packet; wherein
the first target data packet is one of the following: a forged data packet, an uplink real data packet, and a data packet in an uplink data packet set; and
the fifth target data packet is one of the following: a forged data packet, an uplink real data packet, and a data packet in an uplink data packet set.

27. The method according to claim 23 or 25, wherein the obtaining T31 and/or T32 comprises:
obtaining T31 and/or T32 from a data packet of a received second data packet set.

28. The method according to claim 20, wherein the fourth operation corresponding to the data packet set delay comprises at least one of the following:
recording T1;
sending T1 to a third target end;
sending T1 to a fourth target end;
recording T4;
sending T4 to the third target end; and
sending T4 to the fourth target end; wherein
the third target end is one of the following: an N3 interface, an N9 interface, and a radio access network device; and
the fourth target end is one of the following: a terminal; wherein
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway.

29. The method according to claim 22 or 28, wherein
the sending T1 to a third target end comprises: carrying T1 in a data packet of the first data packet set sent to the third target end;
and/or
the sending T1 to a fourth target end comprises: carrying T1 in a data packet of the first data packet set sent to the fourth target end.

30. The method according to claim 24 or 28, wherein
the sending T4 to the third target end comprises: sending a second target data packet to the third target end, wherein the second target data packet carries T4;
and/or
the sending T4 to the fourth target end comprises: sending a sixth target data packet to the fourth target end, wherein the sixth target data packet carries T4; wherein
the second target data packet is one of the following: a forged data packet, a downlink real data packet, and a data packet in a downlink data packet set.

31. The method according to claim 26 or 30, wherein
the first target data packet further comprises identification information of the first data packet set; wherein
the identification information comprises at least one of the following: an identifier of a data packet set and a serial number of the data packet set;
and/or
the fifth target data packet further comprises identification information of the first data packet set; wherein
the identification information comprises at least one of the following: an identifier of a data packet set and a serial number of the data packet set;
and/or
the second target data packet further comprises identification information of the second data packet set; wherein
the identification information comprises at least one of the following: an identifier of a data packet set and a serial number of the data packet set;
and/or
the sixth target data packet further comprises identification information of the second data packet set; wherein
the identification information comprises at least one of the following: an identifier of a data packet set and a serial number of the data packet set.

32. The method according to claim 20, wherein the performing, by an anchor gateway, a second target operation comprises:
obtaining, by the anchor gateway, a data packet set delay monitoring requirement; and
performing, by the anchor gateway, the second target operation according to the data packet set delay monitoring requirement.

33. A data packet set delay processing method, comprising:
performing, by a terminal, a third target operation, wherein the third target operation comprises at least one of the following operations:
a fifth operation corresponding to a data packet set downlink delay;
a sixth operation corresponding to the data packet set downlink delay;
a fifth operation corresponding to a data packet set uplink delay;
a sixth operation corresponding to the data packet set uplink delay;
a fifth operation corresponding to a data packet set delay; and
a sixth operation corresponding to the data packet set delay.

34. The method according to claim 33, wherein the fifth operation corresponding to the data packet set downlink delay comprises at least one of the following:
obtaining T1 and/or T21;
recording T22;
based on T21-T1, determining a data packet set downlink delay between a radio access network device and an anchor gateway;
based on T22-T1, determining a data packet set downlink delay between the terminal and the anchor gateway;
based on T22-T21, determining a data packet set downlink delay between the terminal and the radio access network device; and
sending determined delay information, wherein the delay information comprises at least one of the following: a data packet set downlink delay between the radio access network device and the anchor gateway, a data packet set downlink delay between the terminal and the anchor gateway, and a data packet set downlink delay between the terminal and the radio access network device; wherein
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device; and
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal.

35. The method according to claim 33, wherein the sixth operation corresponding to the data packet set downlink delay comprises at least one of the following:
recording T22;
obtaining T21;
sending T22 to a fifth target end; and
sending T22 and/or T21 to an anchor gateway; wherein
T21 is one of the following: a time at which a radio access network device receives the last data packet of a first data packet set, and a time at which the last data packet of the first data packet set arrives at the radio access network device;
and/or
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal; and
the fifth target end comprises one of the following: a radio access network device and a Uu interface.

36. The method according to claim 33, wherein the fifth operation corresponding to the data packet set uplink delay comprises at least one of the following:
obtaining T4;
obtaining T31;
recording T32;
based on T4-T31, determining a data packet set uplink delay between a radio access network device and an anchor gateway;
based on T4-T32, determining a data packet set uplink delay between the terminal and the anchor gateway;
based on T31-T32, determining a data packet set uplink delay between the terminal and the radio access network device; and
sending determined delay information, wherein the delay information comprises at least one of the following: a data packet set uplink delay between the radio access network device and the anchor gateway, a data packet set uplink delay between the terminal and the anchor gateway, and a data packet set uplink delay between the terminal and the radio access network device; wherein
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal, and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; wherein
the first target end is one of the following: an N3 interface and an anchor gateway.

37. The method according to claim 33, wherein the sixth operation corresponding to the data packet set uplink delay comprises at least one of the following:
recording T32; and
sending T32; wherein
T32 is one of the following: a time at which the terminal starts to wait for the radio access network device to schedule the 1st data packet of the second data packet set, a time at which the 1st data packet of the second data packet set arrives at the terminal, and a time at which the terminal sends the 1st data packet of the second data packet set to the radio access network device.

38. The method according to claim 33, wherein the fifth operation corresponding to the data packet set delay comprises at least one of the following:
obtaining T1 and/or T21;
recording T22;
obtaining T4;
recording T32;
obtaining T31;
based on (T21-T1+T4-T31)/2, determining a data packet set uplink delay and/or downlink delay between a radio access network device and an anchor gateway;
based on (T22-T1+T4-T32)/2, determining a data packet set uplink delay and/or downlink delay between the terminal and the anchor gateway;
based on (T22-T21+T32-T31)/2, determining a data packet set uplink delay and/or downlink delay between the terminal and the radio access network device;
based on (T21-T1+T4-T31), determining a data packet set round-trip delay between the radio access network device and the anchor gateway;
based on (T22-T1+T4-T32), determining a data packet set round-trip delay between the terminal and the anchor gateway;
based on (T22-T21+T32-T31), determining a data packet set round-trip delay between the terminal and the radio access network device; and
sending determined delay information, wherein the delay information comprises at least one of the following: a data packet set round-trip delay between the radio access network device and the anchor gateway, a data packet set round-trip delay between the terminal and the anchor gateway, and a data packet set round-trip delay between the terminal and radio access network device; wherein
T1 is one of the following: a time at which the anchor gateway sends the 1st data packet of a first data packet set, a time at which the anchor gateway receives the 1st data packet of the first data packet set from an N6 interface, and a time at which the 1st data packet of the first data packet set arrives at the anchor gateway;
T21 is one of the following: a time at which the radio access network device receives the last data packet of the first data packet set, and a time at which the last data packet of the first data packet set arrives at the radio access network device;
T22 is one of the following: a time at which the radio access network device sends the last data packet of the first data packet set to the terminal, a time at which the terminal receives or successfully receives the last data packet of the first data packet set, and a time at which the last data packet of the first data packet set arrives at the terminal;
T31 is a time at which the radio access network device sends the 1st data packet of a second data packet set to a first target end;
T32 is one of the following: a time at which the terminal starts to wait for the radio access network device to schedule the 1st data packet of the second data packet set, a time at which the 1st data packet of the second data packet set arrives at the terminal, and a time at which the terminal sends the 1st data packet of the second data packet set to the radio access network device; and
T4 is one of the following: a time at which the anchor gateway receives the last data packet or a plurality of data packets at the tail of the second data packet set, a time at which the anchor gateway sends the last data packet or a plurality of data packets at the tail of the second data packet set to an N6 interface, and a time at which the last data packet or a plurality of data packets at the tail of the second data packet set arrives at the anchor gateway; wherein
the first target end is one of the following: an N3 interface and an anchor gateway.

39. The method according to claim 34 or 38, wherein the obtaining T1 and/or T21 comprises:
obtaining T1 and/or T21 from a data packet of a received first data packet set.

40. The method according to claim 36 or 38, wherein
the obtaining T4 comprises: obtaining T4 from the received third target data packet and/or sixth target data packet; wherein
the third target data packet is one of the following: a forged data packet, a downlink real data packet, and a data packet in a downlink data packet set; wherein
the sixth target data packet is one of the following: a forged data packet, a downlink real data packet, and a data packet in a downlink data packet set;
and/or
the obtaining T31 comprises obtaining T31 from the received third target data packet; and
the third target data packet is one of the following: a forged data packet, a downlink real data packet, and a data packet in a downlink data packet set.

41. The method according to claim 33, wherein the sixth operation corresponding to the data packet set delay comprises at least one of the following:
recording T32;
sending T32;
recording T22;
obtaining T21;
sending T22 to a fifth target end; and
sending T22 and/or T21 to an anchor gateway; wherein
T22 is one of the following: a time at which a radio access network device sends the last data packet of a first data packet set to the terminal, a time at which the terminal receives or successfully receives the last data packet of the first data packet set, and a time at which the last data packet of the first data packet set arrives at the terminal;
T32 ...; and
the fifth target end comprises one of the following: a radio access network device and a Uu interface.

42. The method according to claim 35 or 41, wherein
the obtaining T21 comprises: obtaining T21 from a data packet of a received first data packet set;
and/or
the sending T22 to the fifth target end comprises at least one of the following:
sending a fourth target data packet to the fifth target end, wherein the fourth target data packet carries T22; and
sending control plane signaling to the fifth target end, wherein the control plane signaling carries T22; wherein
the fourth target data packet is one of the following: a forged data packet, an uplink real data packet, and a data packet in an uplink data packet set;
and/or
the sending T22 and/or T21 to an anchor gateway comprises:
sending a fifth target data packet to the anchor gateway, wherein the fifth target data packet carries T22 and/or T21; wherein
the fifth target data packet is one of the following: a forged data packet, an uplink real data packet, and a data packet in an uplink data packet set.

43. The method according to claim 37 or 41, wherein the sending T32 comprises one of the following:
carrying T32 in a data packet of a transmitted second data packet set; and
sending control plane signaling to the fifth target end, wherein the control plane signaling carries T32.

44. The method according to claim 40 or 42, wherein
the third target data packet further comprises identification information of the second data packet set; wherein
the identification information comprises at least one of the following: an identifier of a data packet set and a serial number of the data packet set;
and/or
the sixth target data packet further comprises identification information of the second data packet set; wherein
the identification information comprises at least one of the following: an identifier of a data packet set and a serial number of the data packet set;
and/or
the fourth target data packet further comprises identification information of the second data packet set; wherein
the identification information comprises at least one of the following: an identifier of a data packet set and a serial number of the data packet set;
and/or
the fifth target data packet further comprises identification information of the second data packet set; wherein
the identification information comprises at least one of the following: an identifier of a data packet set and a serial number of the data packet set.

45. The method according to claim 33, wherein the performing, by a terminal, a third target operation comprises:
obtaining, by the terminal, a data packet set delay monitoring requirement; and
performing, by the terminal, the third target operation according to the data packet set delay monitoring requirement.

46. A data packet set delay processing method, comprising:
performing, by a terminal, a fourth target operation, wherein the fourth target operation comprises at least one of the following operations:
recording T22;
recording T32;
sending T32 to a fifth target end;
sending T32 to an anchor gateway;
sending T22 to the fifth target end; and
sending T22 to the anchor gateway; wherein
T22 is one of the following: a time at which a radio access network device sends the last data packet of a first data packet set to the terminal, a time at which the terminal receives or successfully receives the last data packet of the first data packet set, and a time at which the last data packet of the first data packet set arrives at the terminal; and
T32 is one of the following: a time at which the terminal starts to wait for the radio access network device to schedule the 1st data packet of a second data packet set, a time at which the 1st data packet of the second data packet set arrives at the terminal, and a time at which the terminal sends the 1st data packet of the second data packet set to the radio access network device; wherein
the fifth target end comprises one of the following: a radio access network device and a Uu interface.

47. The method according to claim 46, wherein
the sending T32 to a core network device comprises at least one of the following:
carrying T32 in a data packet of a transmitted second data packet set; and
sending control plane signaling to the fifth target end, wherein the control plane signaling carries T32;
and/or
the sending T32 to the anchor gateway comprises: carrying T32 in a data packet of a transmitted second data packet set;
and/or
the sending T22 to the fifth target end comprises at least one of the following:
sending a fourth target data packet to the fifth target end, wherein the fourth target data packet carries T22; and
sending control plane signaling to the fifth target end, wherein the control plane signaling carries T22;
and/or
the sending T22 to the anchor gateway comprises: sending a fifth target data packet to the anchor gateway, wherein the fifth target data packet carries T22; wherein
the fourth target data packet is one of the following: a forged data packet, an uplink real data packet, and a data packet in an uplink data packet set; and
the fifth target data packet is one of the following: a forged data packet, an uplink real data packet, and a data packet in an uplink data packet set.

48. The method according to claim 47, wherein
the fourth target data packet further comprises identification information of the first data packet set;
and/or
the fourth target data packet and/or the fifth target data packet further comprises identification information of the first data packet set; wherein
the identification information comprises at least one of the following: an identifier of a data packet set and a serial number of the data packet set.

49. The method according to claim 46, wherein the performing, by a terminal, a fourth target operation comprises:
obtaining, by the terminal, a data packet set delay monitoring requirement; and
performing, by the terminal, the fourth target operation according to the data packet set delay monitoring requirement.

50. A data packet set delay processing method, comprising:
generating, by a core network device, a data packet set delay monitoring requirement; and
sending, by the core network device, the data packet set delay monitoring requirement.

51. A data packet set delay processing apparatus, comprising:
an execution module, configured to perform a first target operation, wherein the first target operation comprises at least one of the following operations:
a first operation corresponding to a data packet set downlink delay;
a second operation corresponding to the data packet set downlink delay;
a first operation corresponding to a data packet set uplink delay;
a second operation corresponding to the data packet set uplink delay;
a first operation corresponding to a data packet set delay; and
a second operation corresponding to the data packet set delay.

52. A data packet set delay processing apparatus, comprising:
an execution module, configured to perform a second target operation, wherein the second target operation comprises at least one of the following:
a third operation corresponding to a data packet set downlink delay;
a fourth operation corresponding to the data packet set downlink delay;
a third operation corresponding to a data packet set uplink delay;
a fourth operation corresponding to the data packet set uplink delay;
a third operation corresponding to a data packet set delay; and
a fourth operation corresponding to the data packet set delay.

53. A data packet set delay processing apparatus, comprising:
an execution module, configured to perform a third target operation, wherein the third target operation comprises at least one of the following operations:
a fifth operation corresponding to a data packet set downlink delay;
a sixth operation corresponding to the data packet set downlink delay;
a fifth operation corresponding to a data packet set uplink delay;
a sixth operation corresponding to the data packet set uplink delay;
a fifth operation corresponding to a data packet set delay; and
a sixth operation corresponding to the data packet set delay.

54. A data packet set delay processing apparatus, comprising:
an execution module, configured to perform a fourth target operation, wherein the fourth target operation comprises at least one of the following operations:
recording T22;
recording T32;
sending T32; and
sending T22; wherein
T22 is one of the following: a time at which a radio access network device sends the last data packet of a first data packet set to a terminal, a time at which the terminal receives or successfully receives the last data packet of the first data packet set, and a time at which the last data packet of the first data packet set arrives at the terminal; and
T32 is one of the following: a time at which the terminal starts to wait for the radio access network device to schedule the 1st data packet of a second data packet set, a time at which the 1st data packet of the second data packet set arrives at the terminal, and a time at which the terminal sends the 1st data packet of the second data packet set to the radio access network device.

55. A data packet set delay processing apparatus, comprising:
a generating module, configured to generate a data packet set delay monitoring requirement; and
a sending module, configured to send the data packet set delay monitoring requirement.

56. A communication device, comprising a processor and a memory, wherein the memory stores a program or instructions capable of running on the processor, and when the program or the instructions are executed by the processor, the steps of the data packet set delay processing method according to any one of claims 1 to 19 are implemented; or when the program or the instructions are executed by the processor, the steps of the data packet set delay processing method according to any one of claims 20 to 32 are implemented; or when the program or the instructions are executed by the processor, the steps of the data packet set delay processing method according to any one of claims 33 to 45 are implemented; or when the program or the instructions are executed by the processor, the steps of the data packet set delay processing method according to any one of claims 46 to 49 are implemented; or when the program or the instructions are executed by the processor, the steps of the data packet set delay processing method according to claim 50 are implemented.

57. A readable storage medium, wherein the readable storage medium stores a program or instructions, and when the program or the instructions are executed by a processor, the steps of the data packet set delay processing method according to any one of claims 1 to 19 are implemented; or the steps of the data packet set delay processing method according to any one of claims 20 to 32 are implemented; or the steps of the data packet set delay processing method according to any one of claims 33 to 45 are implemented; or the steps of the data packet set delay processing method according to any one of claims 46 to 49 are implemented; or the steps of the data packet set delay processing method according to claim 50 are implemented.
